# EUROPEAN PATENT APPLICATION

(11) **EP 3 506 099 A1**
(43) Date of publication of application: **03.07.2019**
(21) Application number: 16914209.8
(22) Date of filing: 25.08.2016
(51) Int. Cl.: G06F 11/20, G06F 11/07

(54) **ALIVE MANAGEMENT PROGRAM, ALIVE MANAGEMENT METHOD, AND ALIVE MANAGEMENT DEVICE**

(71) Applicant: Fujitsu Limited, Kawasaki-shi, Kanagawa 211-8588 (JP)
(72) Inventor: DOI, Tsunehisa, Kawasaki-shi Kanagawa 211-8588 (JP); IWAMATSU, Noboru, Kawasaki-shi Kanagawa 211-8588 (JP)
(74) Representative: Hoffmann Eitle
(86) International application number: PCT/JP2016/074830
(87) International publication number: WO 2018/037535

(57) **Abstract**

To correctly determine the status of each of a plurality of systems after a failure occurs.

A computer installed in a first facility determines that its local system is in an isolated state in the case where direct communication with all of a plurality of external systems respectively built in a plurality of second facilities is disabled. The computer determines that, among the plurality of external systems, a first external system with respect to which a prescribed time or longer has passed from the last alive confirmation time thereof is in a down state. Also, the computer determines that, among the plurality of external systems, a second external system with which the direct communication is possible is in an alive state. Then, in the case where there is a third external system with respect to which the prescribed time or longer has not passed from the last alive confirmation time thereof and with which the direct communication is disabled, the computer determines to switch one of the local system and the third external system to the down state and the other to the alive state, under prescribed conditions.

## Description

### Technical Field

The embodiments discussed herein relate to a program, method, and apparatus for availability management.

### Background Art

There are services that provide computing resources over a network. Such services are called cloud services. Cloud services include IaaS (Infrastructure as a Service) that provides hardware and infrastructure and PaaS (Platform as a Service) that provides a platform for running software, such as servers and databases.

To improve cloud service reliability, systems for providing the cloud service are spread over a plurality of AZs (Availability Zones). The plurality of AZs each have a separate and independent operational facility. For example, each AZ is independent of the other AZs and has a distinct building, power source facility, air conditioning facility, and backbone network. By building the systems over the plurality of AZs, it becomes possible that, if one AZ entirely goes down due to a large-scale disaster or another event, the systems in other AZs are able to continue to provide the service.

For example, to improve availability using systems built over a plurality of AZs, a redundant pair, i.e., active and standby, is configured for an application (a function that is implemented by causing a processor provided in a computer to run software) for providing a specific service. The active application and the standby application are installed in different systems built in different AZs. During normal periods, the system running the active application provides the service. The system running the standby application holds the same data as the system running the active application does, with data synchronization. The system running the active application and the system running the standby application mutually monitor each other's alive status. If the system running the standby application detects stoppage of the system running the active application, the standby application becomes active and starts to provide the service.

In the case where a service is provided using two applications, i.e., active and standby, as described above, the split-brain syndrome may occur due to a communication failure between the systems. The split-brain syndrome is a condition where a plurality of systems happen to provide the same service due to splitting of the systems. For example, a system running a standby application may determine that a system running an active application has stopped, because of a communication failure with the system running the active application. In this case, the system running the standby application starts to provide the service, even if the active application is running properly. This situation is the split-brain syndrome.

For example, with respect to troubleshooting of a failure in a system in a redundant configuration, there is a technique for determining, if a failure occurs in a component in the system, which of a plurality of servers to use to continue the operation, on the basis of communication with a computer that does not execute the operation. Further, there is considered a computing system for preventing abnormal processing such as restart or stopping of computing devices due to an erroneous output caused by malfunction of an abnormality detecting function in one computing device. Still further, there is considered a technique for preventing occurrence of the split-brain syndrome in a duplex system. In this technique for preventing the occurrence of the split-brain syndrome, the execution of a server process is controlled by majority based on connection status with client computers, for example.

### Citation List

### Patent Literature

PTL1: Japanese National Publication of International Patent Application No. 2008-542858
PTL2: Japanese Laid-open Patent Publication No. 2012-113545
PTL3: Japanese Laid-open Patent Publication No. 2005-258947

### Summary of Invention

### Technical Problem

In related art, troubleshooting may fail to appropriately solve a failure in a system including a plurality of AZs. For example, failure patterns that are difficult to deal with include splitting of AZs and disconnection between AZs. The splitting of AZs is a failure pattern in which the AZs are split into a plurality of AZ groups that are not able to communicate with each other due to multiple failures. The disconnection between AZs is disconnection of communication due to a failure in a communication channel between specific AZs. This failure is not detectable, and thus a switching mechanism that is activated by the failure detection does not work and the disconnection state of the communication channel continues. In the related art, it is not possible to correctly detect such failure patterns for which troubleshooting is difficult, and to correctly determine the status of each of the plurality of systems built in the plurality of AZs after a failure occurs.

According to one aspect, the present invention has an objective to correctly determine the status of each system after a failure occurs.

### Solution to Problem

According to one aspect, there is provided an availability management program that causes a computer in a local system built in a first facility to perform the following process. With this availability management program, the computer first confirms whether direct communication with a plurality of external systems is possible. The plurality of external systems are respectively built in a distributed manner in a plurality of second facilities different from the first facility. The computer then determines that the local system is in an isolated state, upon determining that the direct communication with all of the plurality of external systems is disabled. After that, in the case where the direct communication with at least one of the plurality of external systems is possible, the computer obtains a last alive confirmation time of each of the plurality of external systems via an external system with which communication is possible. The last alive confirmation time indicates the time when the normal operation of an external system was last confirmed. Then, the computer determines that, among the plurality of external systems, a first external system with respect to which a prescribed time or longer has passed from its last alive confirmation time is in a down state. Also, the computer determines that, among the plurality of external systems, a second external system with respect to which the prescribed time or longer has not passed from its last alive confirmation time and with which the direct communication is possible is in an alive state. In addition, in a situation where the plurality of external systems include a third external system with respect to which the prescribed time or longer has not passed from its last alive confirmation time and with which the direct communication is disabled, the computer determines to switch one of the local system and the third external system to the down state and the other to the alive state, under prescribed conditions.

### Advantageous Effects of Invention

According to one aspect, it is possible to correctly determine the status of each of a plurality of systems after a failure occurs.

The above and other objects, features and advantages of the present invention will become apparent from the following description when taken in conjunction with the accompanying drawings which illustrate preferred embodiments of the present invention by way of example.

### Brief Description of Drawings

FIG. 1 illustrates an example of a functional configuration of an apparatus according to a first embodiment.
FIG. 2 illustrates an example of a system configuration according to a second embodiment.
FIG. 3 illustrates an example of a system configuration in an AZ.
FIG. 4 illustrates an example of a hardware configuration of a computer.
FIG. 5 is a block diagram illustrating an example of functions of systems in AZs.
FIG. 6 illustrates an example of communicating information between constitutional elements of systems in AZs.
FIG. 7 illustrates an example of internal configurations of an AZ status determination unit and distributed coordinator.
FIG. 8 illustrates an example of an AZ status table.
FIG. 9 illustrates an example of an AZ alive information table.
FIG. 10 illustrates an example of alive accompanying information.
FIG. 11 is a sequence diagram illustrating an example of an AZ status management process.
FIG. 12 is a flowchart illustrating an example of an AZ status determination process.
FIG. 13 is a flowchart illustrating an example of an inquiry response process.
FIG. 14 illustrates an example of mutual monitoring among AZs.
FIG. 15 illustrates an example of a case where an AZ is down.
FIG. 16 illustrates an example of AZ status tables in the case where the AZ is down.
FIG. 17 illustrates an example of notifying applications of AZ status in the case where the AZ is down.
FIG. 18 illustrates an example of a case where a router fails.
FIG. 19 illustrates an example of AZ status tables in the case where the router fails.
FIG. 20 illustrates an example of notifying applications of AZ status in the case where the router fails.
FIG. 21 illustrates an example of a case where a failure occurs in a communication channel between AZs.
FIG. 22 illustrates an example of AZ status tables in the case where the failure occurs in the communication channel between the AZs.
FIG. 23 illustrates an example of notifying applications of AZ status in the case where the failure occurs in the communication channel between the AZs.
FIG. 24 illustrates an example of a system configuration according to a third embodiment.
FIG. 25 illustrates an example of communicating information between constitutional elements in systems in AZs according to the third embodiment.
FIG. 26 is a flowchart illustrating an inquiry response process according to the third embodiment.
FIG. 27 illustrates an example of a case where an AZ is down.
FIG. 28 illustrates an example of AZ status tables in the case where the AZ is down.
FIG. 29 illustrates an example of notifying applications of AZ status in the case where the AZ is down.
FIG. 30 illustrates an example of a case where a router fails.
FIG. 31 illustrates an example of AZ status tables in the case where the router fails.
FIG. 32 illustrates an example of notifying applications of AZ status in the case where the router fails.
FIG. 33 illustrates an example of a case where a failure occurs in a communication channel between AZs.
FIG. 34 illustrates an example of AZ status tables in the case where the failure occurs in the communication channel between the AZs.
FIG. 35 illustrates an example of notifying applications of AZ status in the case where the failure occurs in the communication channel between the AZs.
FIG. 36 illustrates a system configuration according to a fourth embodiment.
FIG. 37 illustrates an example of an AZ alive information table according to a fifth embodiment.
FIG. 38 illustrates an example of an AZ status table according to the fifth embodiment.
FIG. 39 is a flowchart illustrating an example of an AZ status determination process.
FIG. 40 illustrates an example of AZ status tables in the case where an AZ is down.
FIG. 41 illustrates an example of notifying applications of AZ status in the case where the AZ is down.
FIG. 42 illustrates an example of AZ status tables in the case where a router fails.
FIG. 43 is an example of notifying applications of AZ status in the case where the router fails.
FIG. 44 illustrates an example of AZ status tables in the case where a failure occurs in a communication channel between AZs.
FIG. 45 illustrates an example of notifying applications of AZ status in the case where the failure occurs in the communication channel between the AZs.
FIG. 46 illustrates an example of functions of systems in AZs.
FIG. 47 illustrates an example of availability by redundancy.
FIG. 48 illustrates an example of availability by a fault tolerant system.

### Description of Embodiments

Hereinafter, embodiments of the present invention will be described in detail with reference to the accompanying drawings. Partial features of the embodiments may be combined unless they exclude each other.

### (First Embodiment)

A first embodiment will now be described.

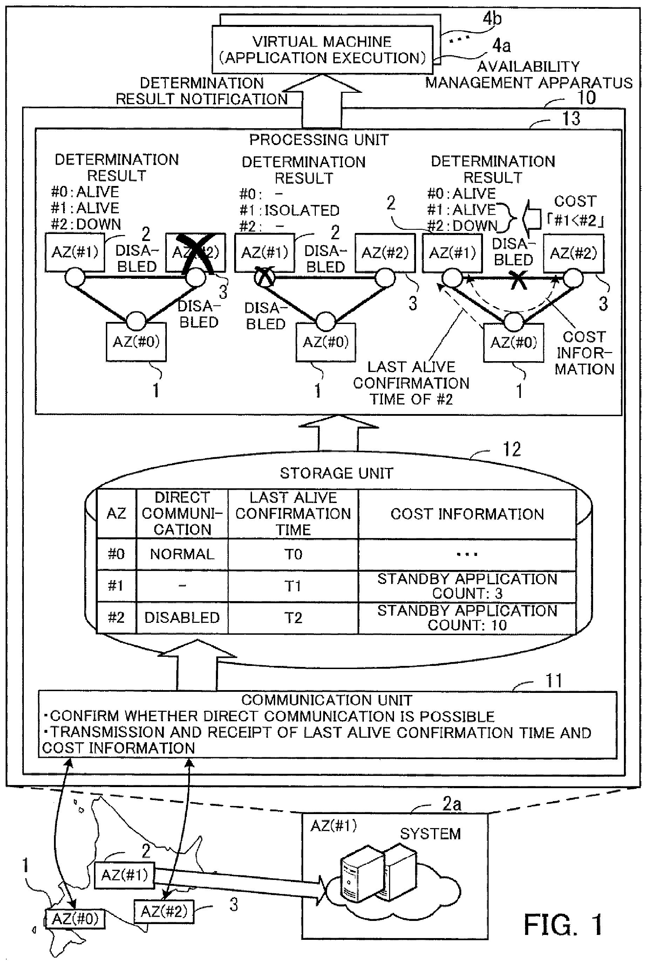

FIG. 1 illustrates an example of a functional configuration of an apparatus according to the first embodiment. In a system according to the first embodiment, a plurality of AZs 1 to 3 are provided as facilities for building computer systems. One system is built in each of the plurality of AZs 1 to 3. The AZ 1 has an identification number "#0," the AZ 2 has an identification number "#1," and the AZ 3 has an identification number "#2." The systems in the plurality of AZs 1 to 3 mutually monitor each other's systems to confirm whether the plurality of AZs 1 to 3 are alive. An AZ being alive means that a system in the AZ is in a state of being able to provide a service. The following describes how a system 2a (a local system) in the AZ 2 performs an availability management process.

The system 2a includes a plurality of computers, for example. Some or all of the computers in the system 2a function as an availability management apparatus 10. The availability management apparatus 10 includes a communication unit 11, a storage unit 12, and a processing unit 13.

The communication unit 11 confirms whether direct communication is possible with each system (external system) built in the AZs 1 and 3, which are different from the AZ 2 where the system 2a including the availability management apparatus 10 is built. The direct communication means communication that does not go through another AZ.

In the case where the communication unit 11 is able to perform direct communication with at least one of the plurality of external systems, the communication unit 11 obtains a last alive confirmation time of each of the plurality of external systems via an external system with which communication is possible. The last alive confirmation time indicates the time when the normal operation of the external system was last confirmed. For example, the communication unit 11 updates the last alive confirmation time of one of the plurality of external systems to the time when a different external system other than the one external system last confirmed the alive state of the one external system or the time when the communication unit 11 last confirmed the alive state of the one external system, whichever is later.

Also, the communication unit 11 is able to obtain, via an external system with which communication is possible, cost information to be used for calculating the cost that is needed to deal with a change in the operating status of an external system when direct communication with the external system becomes disabled. For example, the cost information includes a standby application (service providing function) count (i.e., the number of standby applications) in the external system. With an increase in the standby application count in an external system, more processing is needed to switch the standby applications to active so that the external system becomes active as a whole. That is, the processing cost increases.

When the communication unit 11 obtains a result of confirming whether direct communication is possible, a last alive confirmation time, or cost information, it stores the obtained information in the storage unit 12.

The storage unit 12 stores therein results of confirming whether direct communication with each of the AZs 1 and 3 is possible, the last alive confirmation times of the AZs 1 to 3, and the cost information of the AZs 1 to 3. In this connection, the last alive confirmation time of the AZ 2 where the availability management apparatus 10 itself is installed is set to the time when the system in the AZ 1 or AZ 3 confirmed the alive state of the system 2a in the AZ 2. In addition, the cost information of the AZ 2 itself is stored in the storage unit 12 by the processing unit 13, for example.

The processing unit 13 refers to the information stored in the storage unit 12 to determine the status of each of the AZs 1 to 3. For example, in the case where direct communication is disabled with all of the plurality of external systems, the processing unit 13 determines that its local system is in an isolated state. In addition, the processing unit 13 determines that, among the plurality of external systems, an external system with respect to which a prescribed time or longer has passed from its last alive confirmation time is in a down state. Furthermore, the processing unit 13 determines that, among the plurality of external systems, an external system with respect to which the prescribed time or longer has not passed from its last alive confirmation time and with which direct communication is possible is in the alive state.

The plurality of external systems may include an external system with respect to which the prescribed time or longer has not passed from its last alive confirmation time and with which direct communication is disabled. In this case, the processing unit 13 determines to switch one of its local system and the external system with which the direct communication is disabled to the down state and the other to the alive state, under prescribed conditions. For example, the processing unit 13 determines which to switch to the down state and which to switch to the alive state, its local system or the external system with which direct communication is disabled, on the basis of the cost information. In the case of making the determination on the basis of the cost information, the processing unit 13 compares first cost that is needed to switch the local system to the alive state and the external system to the down state with second cost that is needed to switch the external system to the alive state and the local system to the down state. If the first cost is lower, the processing unit 13 determines to switch the local system to the alive state and the external system to the down state. If the second cost is lower, on the other hand, the processing unit 13 determines to switch the external system to the alive state and the local system to the down state.

The processing unit 13 notifies virtual machines 4a, 4b, ... operating in the local system of the determination result as to its local system and the plurality of external systems. The virtual machines 4a, 4b, ... are called instances. The virtual machines 4a, 4b, ... run applications as active or standby according to the determination result.

The above-described availability management apparatus 10 is able to correctly determine the status of each of the AZs 1 to 3. For example, consider a case where no applications are running in the AZ 1, and applications are running in the AZ 2 and AZ 3. Each application running in the AZ 2 is paired with an application of the same kind running in the AZ 3. One of paired applications runs as active and the other as standby. When the active application stops due to a system failure or another event, the standby application becomes active.

The following describes a case where the entire system in the AZ 3 stops in the above situation. When the AZ 3 goes down, the communication unit 11 recognizes that direct communication with the system in the AZ 3 is disabled, and stores information indicating that the direct communication with the AZ 3 is disabled, in the storage unit 12. In addition, the communication unit 11 stores, as the last alive confirmation time of the AZ 3, the time when the communication unit 11 last confirmed the system in the AZ 3 or the last alive confirmation time of the AZ 3 obtained from the system in the AZ 1, whichever is later, in the storage unit 12. When the prescribed time or longer has passed from the last alive confirmation time of the AZ 3, the processing unit 13 determines that the AZ 3(#2) is in the down state. In addition, the processing unit 13 determines that the AZ 1(#0) and AZ 2(#1) are both in the alive state since direct communication between its local system and the system in the AZ 1 is possible.

The following describes a case where the AZ 2 has a problem with the function of communication with the systems in the other AZs 1 and 3. If a failure occurs in the communication function, the communication unit 11 recognizes that direct communication with both the AZ 1 and AZ 3 is disabled, and then stores information indicating that the direct communication with each of the AZs 1 and AZ 3 is disabled, in the storage unit 12. Since the direct communication is disabled with both the AZ 1 and AZ 3, the processing unit 13 determines that its local system is in the isolated state.

The following describes a case where a failure occurs in a communication channel between the AZ 2 and the AZ 3. When a failure occurs in the communication channel, the communication unit 11 recognizes that direct communication with the system in the AZ 3 is disabled, and then stores information indicating that the direct communication with the AZ 3 is disabled, in the storage unit 12. In addition, the communication unit 11 stores a last alive confirmation time of the AZ 3 obtained from the system in the AZ 1, in the storage unit 12. Further, the communication unit 11 obtains the cost information of the AZ 3 from the system in AZ 3 via the system of the AZ 1. The communication unit 11 stores the obtained cost information in the storage unit 12.

Since the direct communication with the AZ 3 is disabled although the prescribed time or longer has not passed from the last alive confirmation time of the AZ 3, the processing unit 13 recognizes that a failure has occurred in the communication channel between the AZ 2 and the AZ 3. Then, the processing unit 13 determines which to switch to the down state and which to switch to the alive state, its local system or the external system with which the direct communication is disabled, on the basis of the cost information of the AZ 2 and AZ 3. Referring to the example of FIG. 1, the standby application count in each of the AZs 2 and 3 is set as the cost information. The standby application count in the AZ 2 is "3," whereas the standby application count in the AZ 3 is "10." To switch the AZ 2 to the down state and the AZ 3 to the alive state, the ten standby applications need to become active. However, to switch the AZ 3 to the down state and the AZ 2 to the alive state, the three standby applications need to become active. That is, the latter transition of switching the AZ 3 to the down state and the AZ 2 to the alive state costs less. Therefore, the processing unit 13 determines to switch the AZ 2(#1) to the alive state and the AZ 3(#2) to the down state, so as to take troubleshooting with low cost.

The processing unit 13 notifies the virtual machines 4a, 4b, ... of a determination result. If the AZ 2 and AZ 3 are both in the alive state, the virtual machines 4a, 4b, ... keep their current states (active or standby). On the other hand, if the AZ 2 is in the alive state and the AZ 3 is in the down state, all the virtual machines 4a, 4b, ... become active. If the AZ 3 is in the alive state and the AZ 2 is in the down state, all the virtual machines 4a, 4b, ... become standby. If the AZ 2 is in the isolated state, all the virtual machines 4a, 4b, ... become standby.

In this connection, FIG. 1 illustrates the availability management apparatus 10 provided in the AZ 2. In addition, such an availability management apparatus 10 is provided in the other AZs 1 and 3. Then, when a failure occurs, the status of the systems in the AZs 1 to 3 is determined in each of the AZs 1 to 3. As a result, it is possible to correctly recognize a failure pattern, such as splitting of AZs or disconnection between AZs, and also to correctly determine the status of the system in each of the AZs 1 to 3.

For example, in the first embodiment, the AZs 1 to 3 are provided at three separate locations. If neither the AZ 1 nor the AZ 2 is able to communicate with the AZ 3, the AZs 1 and 2 determine that the AZ 3 is down, and then the AZ 1 may become alive. In this connection, in the case where neither the AZ 1 nor the AZ 2 is able to communicate with the AZ 3, the AZs are split into an AZ group including the AZs 1 and 2 and the AZ 3 that may be isolated from the AZ group. In this case, the AZ 3 is able to correctly determine that the AZ 3 is in the isolated state. As a result, the applications in the AZ 3 are able to become standby, thereby preventing the occurrence of the split-brain syndrome.

On the other hand, there is a case where direct communication between the AZ 2 and the AZ 3 is disabled but communication between the AZ 1 and the AZ 3 is possible. In this case, the AZ 2 and AZ 3 exchange each other's cost information via the AZ 1 and they individually compare their cost. Then, both the AZ 2 and the AZ 3 determine to switch one of the AZs 2 and 3 to the alive state, whichever has lower cost, and to switch the other with higher cost to the down state. This enables the AZ 2 and AZ 3 to obtain the same determination result, thereby preventing the split-brain syndrome.

In addition to the above, the availability management apparatus 10 determines the status of each of the AZs 1 to 3, and notifies each of the virtual machines 4a, 4b, ... of the determination result. This enables a plurality of applications to determine whether to run as active or standby, on the basis of the same determination result. As a result, it is possible to prevent an incident where a plurality of applications that interact with each other run as active in different AZs. That is to say, if the applications individually determine the situation when a failure occurs, a plurality of applications that interact with each other may run as active in different AZs. If the applications that interact with each other run as active in different AZs, these applications may fail to perform interactive processing properly. By contrast, in the first embodiment, since the processing unit 13 uniformly determines which AZ to switch to the alive state and which AZ to the down state, the plurality of applications that interact with each other are able to take consistent troubleshooting of a failure, on the basis of the determination result. As a result, it is guaranteed that the plurality of applications that interact with each other run as active in the same AZ, which improves the availability of the entire system.

In this connection, in the case where direct communication between the AZ 2 and the AZ 3 is disabled due to a failure in the communication channel between the AZ 2 and the AZ 3, the current operating status of applications that do not use the failed communication channel do not need to be changed. To this end, for example, the processing unit 13 may be designed to receive, from each virtual machine 4a, 4b, ..., an inquiry specifying used systems used by the virtual machine 4a, 4b, ..., and then to return a determination result modified according to the used systems to the virtual machine 4a, 4b, .... For example, in the case where a used system used by a virtual machine 4a, 4b, ... is determined to be in the down state in a situation where there is an external system with respect to which a prescribed time or longer has not passed from its last alive confirmation time and with which direct communication is disabled, the processing unit 13 modifies the determination result. In this case, if the used system is the local system or an external system with which direct communication is possible, the processing unit 13 notifies the virtual machine 4a, 4b, ... that the used system is in the alive state. That is, it is possible to give a notification of a state indicating no failure, to the virtual machine running the application that is not affected by the failure, thereby eliminating the wasteful troubleshooting of the failure.

As described above, in the first embodiment, by correctly determining the status of each of the AZs 1 to 3 when a failure occurs and notifying the virtual machines running applications of the determination result, it is possible to improve the availability of the entire system.

In this connection, the processing unit 13 of FIG. 1 may be implemented by using a processor provided in the availability management apparatus 10, for example. In addition, the storage unit 12 may be implemented by using a memory or a storage device provided in the availability management apparatus 10, for example. The communication unit 11 may be implemented by using a network interface provided in the availability management apparatus 10, for example.

### (Second Embodiment)

A second embodiment will now be described.

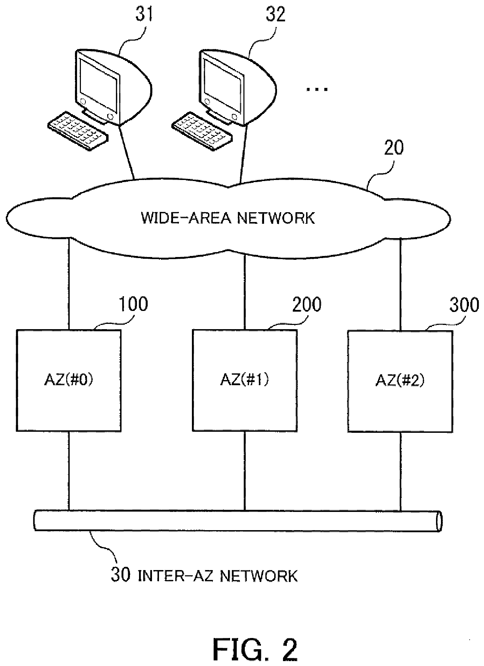

FIG. 2 illustrates an example of a system configuration according to the second embodiment. Systems in a plurality of AZs 100, 200, and 300 are connected to a wide-area network 20 and an inter-AZ network 30. A plurality of terminal devices 31, 32, ... are connected to the wide-area network 20. The systems in the AZs 100, 200, and 300 receive requests from the terminal devices 31, 32, ... over the wide-area network 20, and provide requested services. In addition, the systems in the AZs 100, 200, and 300 communicate information, such as the operating status of the systems, with each other over the inter-AZ network 30.

In this connection, the AZs 100, 200, and 300 are desirably located apart from each other by a certain distance, such that, if a disaster occurs in one AZ, the systems of the other AZs are able to operate properly. In this connection, an active application and a standby application cooperate with each other for data replication or the like. Therefore, even in the case where the AZs 100, 200, and 300 are apart from each other, it is desirable that the inter-AZ network 30 enable communication between the AZs 100, 200, and 300 with low latency of about 1 ms at maximum, for example.

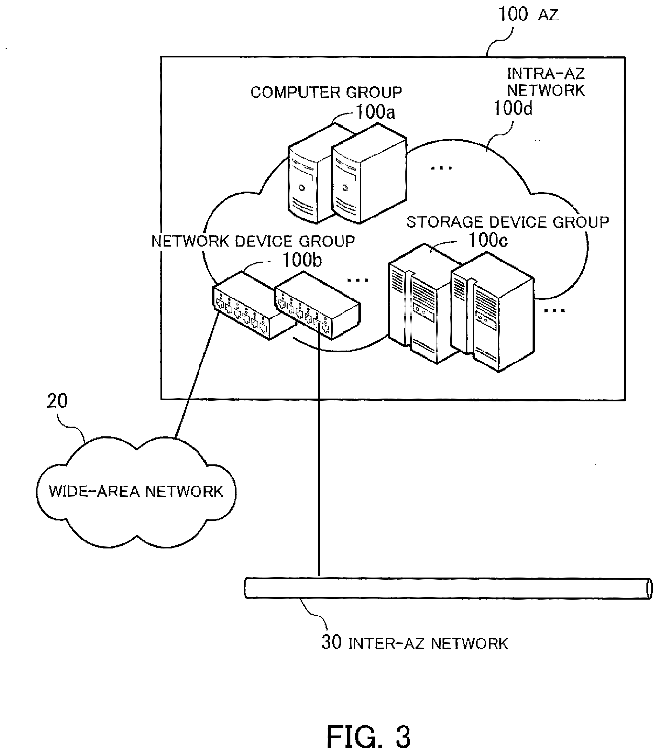

FIG. 3 illustrates an example of a system configuration in an AZ. In the AZ 100, a computer group 100a including a plurality of computers, a network device group 100b including a plurality of network devices, and a storage device group 100c including a plurality of storage devices are provided. The computer group 100a, network device group 100b, and storage device group 100c are connected to each other over an intra-AZ network 100d within the AZ 100.

Some of the network devices included in the network device group 100b are connected to the wide-area network 20 or inter-AZ network 30. Each computer in the computer group 100a is able to communicate with systems built in the other AZs via a network device, such as a router, included in the network device group 100b.

A power source facility for supplying power to the devices illustrated in FIG. 3 and an air conditioning facility for cooling are independent of those provided in the other AZs 200 and 300.

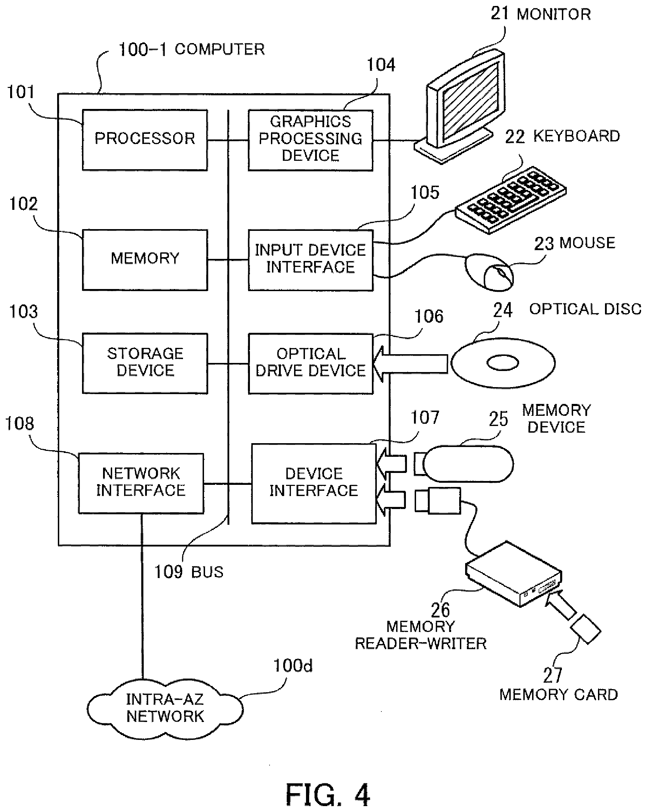

FIG. 4 illustrates an example of a hardware configuration of a computer. The computer 100-1 is entirely controlled by a processor 101. A memory 102 and a plurality of peripherals are connected to the processor 101 via a bus 109. The processor 101 may be a multiprocessor. The processor 101 may be a CPU (Central Processing Unit), an MPU (Micro Processing Unit), or a DSP (Digital Signal Processor), for example. Some of functions implemented by the processor 101 running programs may be implemented by using an ASIC (Application-Specific Integrated Circuit), a PLD (Programmable Logic Device), or another electronic circuit.

The memory 102 is used as a primary storage device of the computer 100-1. The memory 102 temporarily stores therein at least part of OS (Operating System) programs and application programs to be executed by the processor 101. The memory 102 also stores therein various kinds of data to be used by the processor 101 in processing. For example, a RAM (Random Access Memory) or another volatile semiconductor storage device may be used as the memory 102.

The peripherals connected to the bus 109 include a storage device 103, a graphics processing device 104, an input device interface 105, an optical drive device 106, a device interface 107, and a network interface 108.

The storage device 103 electrically or magnetically performs data write and read on a built-in recording medium. The storage device 103 is used as an auxiliary storage device of the computer. The storage device 103 stores therein OS programs, application programs, and various kinds of data. In this connection, for example, an HDD (Hard Disk Drive) or an SSD (Solid State Drive) may be used as the storage device 103.

A monitor 21 is connected to the graphics processing device 104. The graphics processing device 104 displays images on the screen of the monitor 21 in accordance with instructions from the processor 101. As the monitor 21, a display device using a CRT (Cathode Ray Tube) or a liquid crystal display device may be used.

A keyboard 22 and a mouse 23 are connected to the input device interface 105. The input device interface 105 gives signals received from the keyboard 22 and mouse 23 to the processor 101. In this connection, the mouse 23 is an example of pointing devices, and another pointing device may be used. Other pointing devices include a touch panel, a tablet, a touchpad, and a track ball.

The optical drive device 106 performs data read from an optical disc 24 using laser light or the like. The optical disc 24 is a portable recording medium, on which data is recorded so as to be readable with reflection of light. As the optical disc 24, a DVD (Digital Versatile Disc), a DVD-RAM, a CD-ROM (Compact Disc Read Only Memory), a CD-R (Recordable), or a CD-RW (ReWritable) may be used.

The device interface 107 is a communication interface for enabling peripherals to be connected to the computer 100-1. For example, a memory device 25 and memory reader-writer 26 are connected to the device interface 107. The memory device 25 is a recording medium provided with a function of communication with the device interface 107. The memory reader-writer 26 is a device for performing data write and read on a memory card 27. The memory card 27 is a card-type recording medium.

The network interface 108 is connected to the intra-AZ network 100d. The network interface 108 communicates data with another computer or communication device over the intra-AZ network 100d.

With the hardware configuration illustrated in FIG. 4, each computer in the AZs 100, 200, and 300 is able to implement the processing functions of the second embodiment. In this connection, the availability management apparatus 10 illustrated in the first embodiment may be implemented with the same hardware configuration as the computer 100-1 of FIG. 3.

For example, the computer 100-1 implements the processing functions of the second embodiment by running programs recorded on a computer-readable recording medium. The programs describing the processing contents to be executed by the computer 100-1 are recorded on a variety of recording media. For example, the programs to be executed by the computer 100-1 may be stored in the storage device 103. The processor 101 loads at least part of a program from the storage device 103 to the memory 102 and executes the program. Alternatively, the programs to be executed by the computer 100-1 may be recorded on the optical disc 24, memory device 25, memory card 27, or another portable recording medium. The programs stored in such a portable recording medium may become executable after being installed in the storage device 103 under the control of the processor 101, for example. Yet alternatively, the processor 101 may read a program directly from the portable recording medium and execute the program.

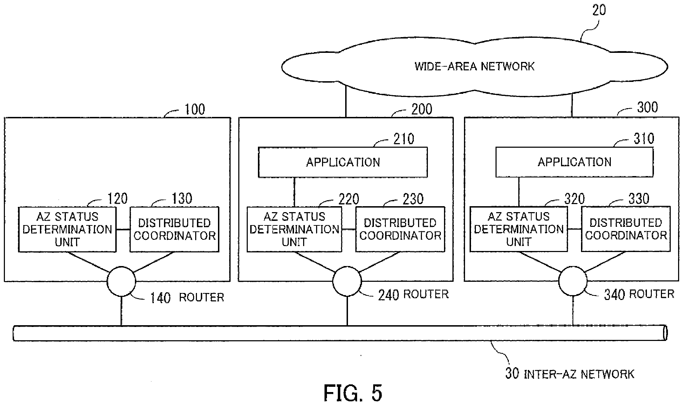

FIG. 5 is a block diagram illustrating an example of functions of systems in AZs. The system in the AZ 100 includes an AZ status determination unit 120, a distributed coordinator 130, and a router 140. The system in the AZ 200 includes an application 210, an AZ status determination unit 220, a distributed coordinator 230, and a router 240. The system in the AZ 300 includes an application 310, an AZ status determination unit 320, a distributed coordinator 330, and a router 340.

The applications 210 and 310 provide a service over the wide-area network 20. In addition, the application 210 inquires the AZ status determination unit 220 about AZ status. The application 210 then obtains the status of each of the AZs 100, 200, and 300 from the AZ status determination unit 220 and determines whether to provide the service. For example, if the system in the other AZ 300 stops, the application 210 determines to become active and provide the service. The application 310 inquires the AZ status determination unit 320 about AZ status. The application 310 then obtains the status of each of the AZs 100, 200, and 300 from the AZ status determination unit 320 and determines whether to provide the service.

The AZ status determination units 120, 220, and 320 communicate with each other to determine the status of the systems in the AZs 100, 200, and 300. For example, the AZ status determination unit 120 obtains AZ alive information indicating the status of the AZs 100, 200, and 300 obtained by the distributed coordinator 130 communicating with the other distributed coordinators 230 and 330. In addition, the AZ status determination unit 120 makes peer-to-peer connection with the system of each of the other AZs 200 and 300 to perform the alive confirmation of the communication-party's system. Hereinafter, such alive confirmation is called peer monitoring. Then, the AZ status determination unit 120 determines the status of the systems in the AZs 100, 200, and 300 on the basis of the obtained AZ alive information and the alive confirmation results obtained with the peer monitoring.

The AZ status determination unit 220 obtains AZ alive information indicating the status of the AZs 100, 200, and 300 from the distributed coordinator 230. In addition, by carrying out the peer monitoring on the other AZs 100 and 300, the AZ status determination unit 220 makes the alive confirmation of the communication-parties' systems. Then, the AZ status determination unit 220 determines the status of the systems in the AZs 100, 200, and 300 on the basis of the obtained AZ alive information and the alive confirmation results obtained with the peer monitoring. In addition, when receiving an inquiry from the application 210, the AZ status determination unit 220 gives a response about the status of the systems in the AZs 100, 200, and 300 to the application 210.

The AZ status determination unit 320 obtains AZ alive information indicating the status of the AZs 100, 200, and 300 from the distributed coordinator 330. In addition, by carrying out the peer monitoring on the other AZs 100 and 200, the AZ status determination unit 320 makes the alive confirmation of the communication parties' systems. Then, the AZ status determination unit 320 determines the status of the systems in the AZs 100, 200, and 300 on the basis of the obtained AZ alive information and the alive confirmation results obtained with the peer monitoring. In addition, when receiving an inquiry from the application 310, the AZ status determination unit 320 gives a response about the status of the systems in the AZs 100, 200, and 300 to the application 310.

The distributed coordinators 130, 230, and 330 assist distributed cooperative processing in the large-scale system. For example, the distributed coordinators 130, 230, and 330 communicate the operating status of the systems in the AZs 100, 200, and 300 with each other to share the operating status.

The routers 140, 240, and 340 perform communication over the inter-AZ network 30.

In this connection, lines connecting the constitutional elements of FIG. 5 represent some of communication paths, and communication paths other than the illustrated ones may be configured. In addition, for example, the functions of each constitutional element of FIG. 5 may be implemented by a computer executing a program module corresponding to the constitutional element. For example, software, such as Apache ZooKeeper (registered trademark) or Galera Cluster (registered trademark), may be used to implement the distributed coordinators 130, 230, and 330.

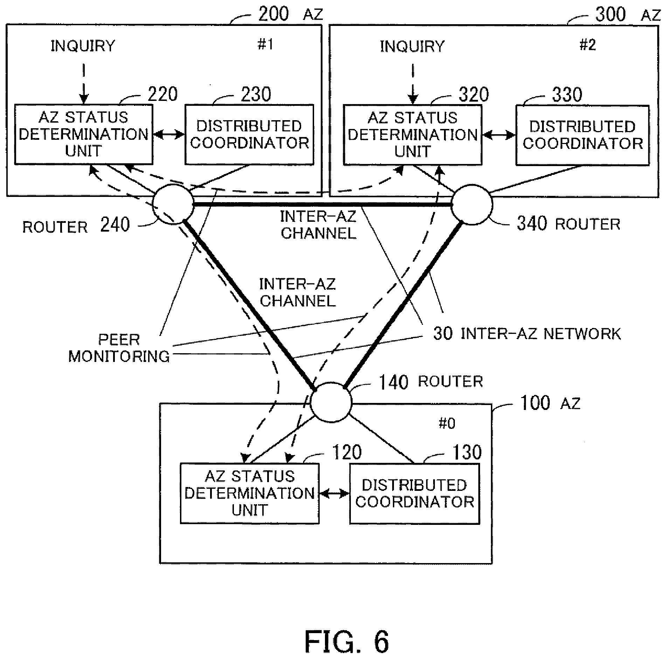

FIG. 6 illustrates an example of communicating information between constitutional elements of systems in AZs. The AZ status determination units 120, 220, and 320 access the distributed coordinators 130, 230, and 330, respectively, to obtain AZ alive information. Also, the AZ status determination units 120, 220, and 320 carry out peer monitoring over the inter-AZ network 30. In addition, when receiving inquiries from the applications 210 and 310, the AZ status determination units 220 and 320 give responses about the status of each AZ.

The following describes the internal configurations of the AZ status determination unit 220 and distributed coordinator 230.

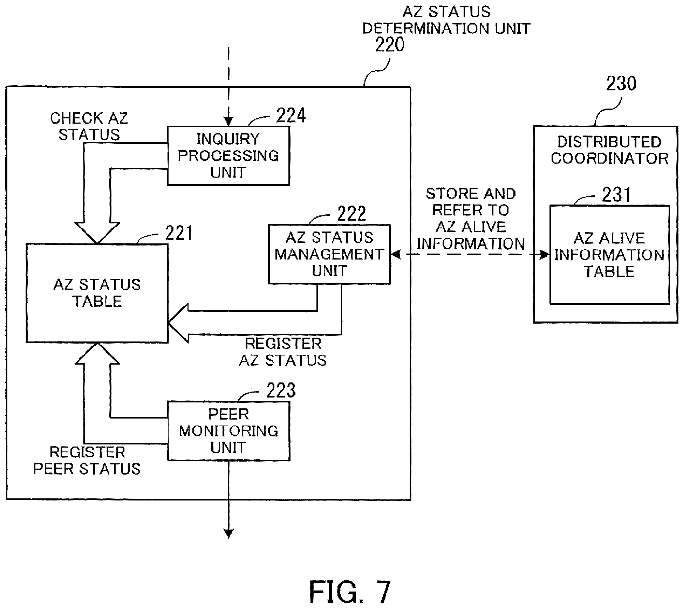

FIG. 7 illustrates an example of internal configurations of an AZ status determination unit and distributed coordinator. The distributed coordinator 230 has an AZ alive information table 231. The AZ alive information table 231 stores therein alive information of the systems in the AZs 100, 200, and 300. The AZ alive information table 231 is stored in a memory provided in a computer in the AZ 200, for example.

The AZ status determination unit 220 has an AZ status table 221, an AZ status management unit 222, a peer monitoring unit 223, and an inquiry processing unit 224.

The AZ status table 221 stores therein the alive status of AZs obtained from the distributed coordinator 230, the status of AZs confirmed with peer monitoring, and others. The AZ status table 221 is stored in a memory provided in a computer in the AZ 200, for example.

The AZ status management unit 222 obtains AZ alive information from the distributed coordinator 230. Then, the AZ status management unit 222 registers the status of the AZs 100, 200, and 300 recognized from the AZ alive information in the AZ status table 221.

The peer monitoring unit 223 carries out peer monitoring with the systems in the other AZs 100 and 300. For example, the peer monitoring unit 223 sends TCP/IP (Transmission Control Protocol/Internet Protocol) packets to the systems in the other AZs 100 and 300, and determines the operating status of the systems in the AZs 100 and 300 on the basis of whether any responses arrive within a prescribed time period. The peer monitoring unit 223 registers the operating status of the AZs 100 and 300 confirmed with the peer monitoring, in the AZ status table 221.

In this connection, the peer monitoring unit 223 is able to detect a failure, which is not detectable through failure detection at a data link layer or a physical layer, by carrying out the peer monitoring using the same protocol as used by an application for communication, like TCP/IP. For example, even though a system is judged normal by a network interface performing hardware failure detection, the system may have a problem of a failure in TCP/IP-based communication. The peer monitoring unit 223 is able to detect such a failure by carrying out the peer monitoring using TCP/IP. As a result, it is possible to correctly determine the status of the AZs.

The inquiry processing unit 224 receives an inquiry from the application 210. The inquiry processing unit 224 checks the status of the AZs 100, 200, and 300 registered in the AZ status table 221 in response to the inquiry. The inquiry processing unit 224 then returns information indicating the status of the AZs 100, 200, and 300 to the application 210.

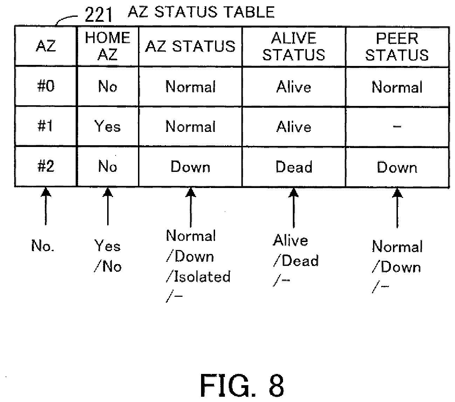

FIG. 8 illustrates an example of an AZ status table. The AZ status table 221 has the following columns, AZ, Home AZ, AZ Status, Alive Status, and Peer Status. The AZ column contains the identification numbers (No.) of the AZs 100, 200, and 300. The Home AZ column indicates whether a corresponding AZ is the home AZ. "Yes" in the Home AZ column means that the corresponding AZ is an AZ where the system having the AZ status table 221 is built. "No" in the Home AZ column means that the corresponding AZ is not an AZ where the system having the AZ status table 221 is built.

The AZ Status column contains operating status to be applied to the corresponding AZ, which is determined with reference to the Alive Status column and Peer Status column. For example, the AZ Status column contains any of the following: "Normal," "Down," "Isolated," and "-." "Normal" means that the corresponding AZ is enabled to allow provision of a service. "Down" means that the corresponding AZ is disabled to stop providing a service. "Isolated" means that the corresponding AZ is isolated. "-" means that the status of the corresponding AZ is unknown.

The Alive Status column contains the alive status of AZs obtained from the distributed coordinator 230. For example, the Alive Status column contains any of the following: "Alive," "Dead," and "-." "Alive" means that the corresponding AZ is operating properly. "Dead" means that the corresponding AZ is down. "-" means that the status of the corresponding AZ is unknown.

The Peer Status column contains the status of the corresponding AZ confirmed with peer monitoring. For example, the Peer Status column contains any of the following: "Normal," "Down," and "Normal" means that the corresponding AZ is operating normally. "Down" means that the corresponding AZ is down. "-" means that the corresponding AZ (for example, the home AZ) is not under the peer monitoring.

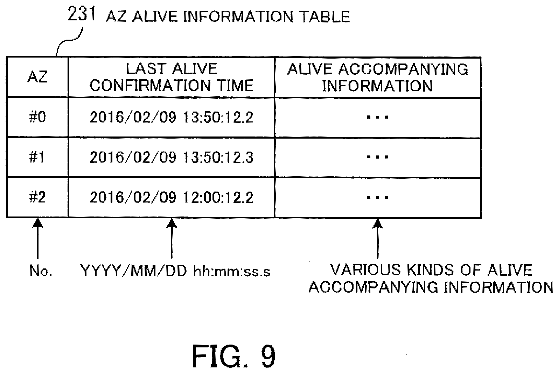

FIG. 9 illustrates an example of an AZ alive information table. The AZ alive information table 231 has the following columns: AZ, Last Alive Confirmation Time, and Alive Accompanying Information. The AZ column contains the identification numbers (No.) of the AZs 100, 200, and 300. The Last Alive Confirmation Time column indicates the date and time when the alive state of a corresponding AZ was last confirmed. The Alive Accompanying Information column contains various kinds of alive accompanying information of the corresponding AZ. The alive accompanying information indicates the operating conditions of an alive AZ.

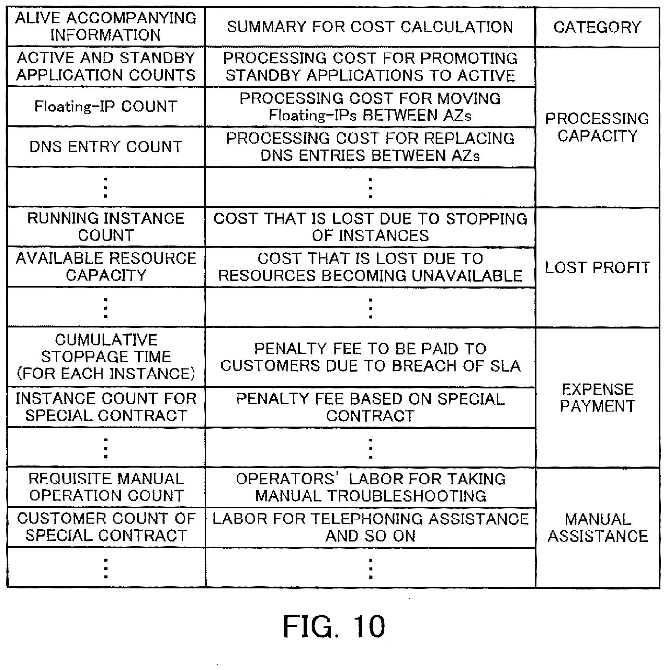

FIG. 10 illustrates an example of alive accompanying information. Referring to the example of FIG. 10, alive accompanying information is classified under four categories. Each piece of alive accompanying information is used for calculating the cost that is needed to take troubleshooting of a failure, such as switching of an application from standby to active. This cost is a numerical value obtained by converting time or economic loss that is caused by switching between active and standby.

A processing capacity category includes alive accompanying information to be used for calculating the cost (processing cost) of consuming wasteful processing capacity for failover or another. For example, this processing capacity category includes alive accompanying information such as Active and Standby application counts, Floating-IP count, DNS (Domain Name System) entry count.

The active and standby application counts indicate the number of applications running as active and the number of applications running as standby, in an AZ. These active and standby application counts are used for calculating the processing cost for promoting standby applications to active.

The Floating-IP count indicates the number of IP addresses that may be dynamically added to virtual instances (virtual machines or the like). This Floating-IP count is used for calculating the processing cost for moving Floating-IPs between AZs.

The DNS entry count indicates the number of domains entered in a DNS. This DNS entry count is used for calculating the processing cost for replacing DNS entries between AZs.

A lost profit category includes alive accompanying information to be used for calculating profit (lost profit) not realized due to stopping of instances (for example, virtual machines) to be stopped. For example, the lost profit category includes alive accompanying information such as running instance count and available resource capacity.

The running instance count indicates the number of instances running in an AZ to be disabled. This running instance count is used for calculating the cost that is lost due to stopping of instances.

The available resource capacity indicates the capacity of free resources in running instances. This available resource capacity is used for calculating the cost that is lost due to resources becoming unavailable by stopping of instances.

An expense payment category includes alive accompanying information that is used for calculating the expense to be paid in the case where money reimbursement is needed due to stopping. For example, the expense payment category includes alive accompanying information such as a cumulative stoppage time of each instance and instance count for special contract.

The cumulative stoppage time indicates a cumulative time during which an instance such as a virtual machine stops. This cumulative stoppage time is used for calculating the penalty fee to be paid to customers due to a breach of SLA (Service Level Agreement)
The instance count for special contract is the number of instances running under a contract in which a penalty occurs depending on how a failure is dealt with. This instance count for special contract is used for calculating the penalty fee based on a special contract.

A manual assistance category includes alive accompanying information to be used for calculating the labor cost in the case where the labor cost is incurred for operators taking troubleshooting of a failure. For example, the manual assistance category includes alive accompanying information such as requisite manual operation count and customer count of special contract.

The requisite manual operation count indicates the number of manual operations to be performed for troubleshooting of a failure. This requisite manual operation count is used for calculating the labor cost according to operators' labor for taking manual troubleshooting.

The customer count of special contract indicates the number of customers having contracts that allow the customers to use manual assistance such as telephoning for troubleshooting of a failure. This customer count of special contract is used for calculating the labor cost according to labor for telephoning assistance and so on.

For example, the total cost calculated from one or plural pieces of alive accompanying information for a specified AZ is taken as a handling cost of the AZ.

The following describes a procedure for an AZ status management process.

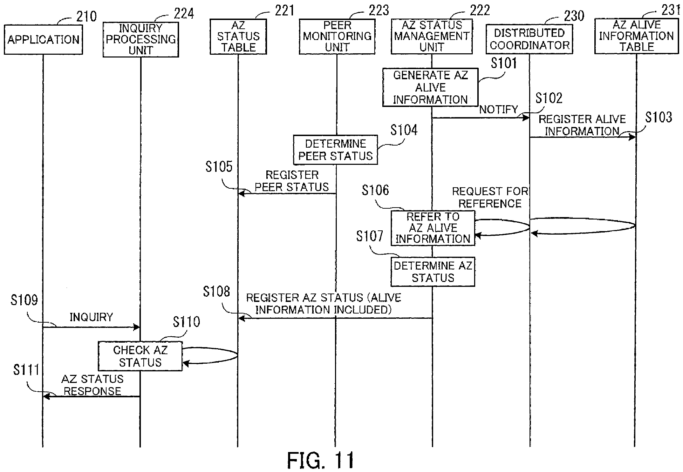

FIG. 11 is a sequence diagram illustrating an example of an AZ status management process. The AZ status management unit 222 generates AZ alive information about the AZ 200 (step S101). Then, the AZ status management unit 222 notifies the distributed coordinator 230 of the generated AZ alive information (step S102). The distributed coordinator 230 registers the received AZ alive information in the AZ alive information table 231 (step S103).

The peer monitoring unit 223 carries out peer monitoring on the other AZs 100 and 300, and determines the peer status (step S104). The peer monitoring unit 223 then registers the determined peer status in the AZ status table 221 (step S105).

After that, the AZ status management unit 222 refers to the AZ alive information in the AZ alive information table 231 via the distributed coordinator 230 (step S106). The AZ status management unit 222 determines the status of each of the AZs 100, 200, and 300 on the basis of the AZ alive information (step S107). The AZ status management unit 222 registers the AZ alive information and the result of determining the AZ status in the AZ status table 221 (step S108).

The application 210 makes an inquiry about AZ status at a prescribed time (step S109). The inquiry processing unit 224 refers to the AZ status table 221 in response to the inquiry (step S110). Then, the inquiry processing unit 224 gives a response about the AZ status to the application 210 (step S111).

The following describes, in detail, a procedure of an AZ status determination process performed by the AZ status determination unit 220.

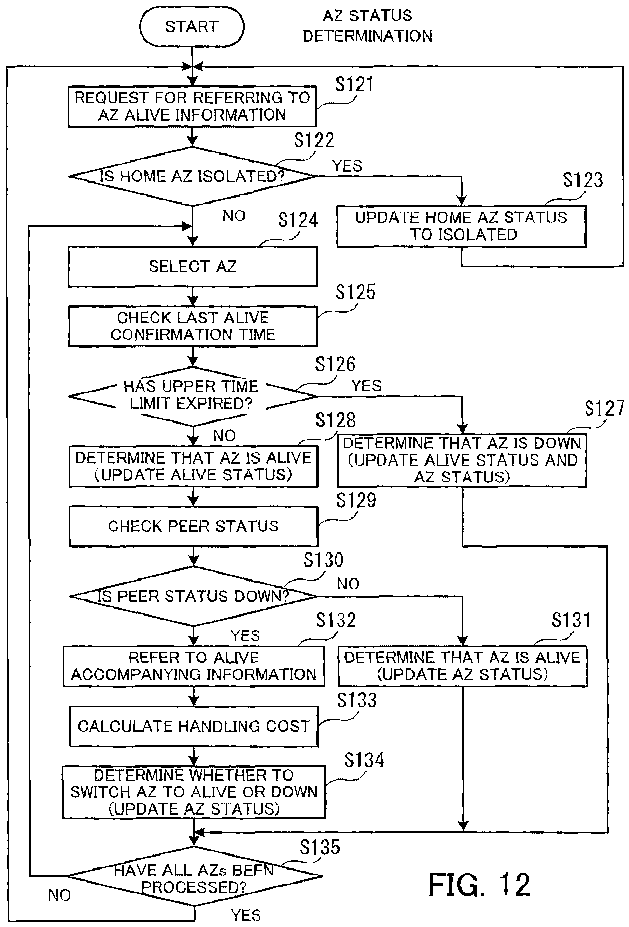

FIG. 12 is a flowchart illustrating an example of an AZ status determination process. Hereinafter, the process of FIG. 12 will be described step by step.

(Step S121) The AZ status management unit 222 makes a request for referring to AZ alive information to the distributed coordinator 230. The distributed coordinator 230 returns, as a response, the AZ alive information registered in the AZ alive information table 231 if the AZ alive information table 231 has the latest status information updated through communication with the other AZs 100 and 300. If the communication with the other AZs 100 and 300 is disabled and therefore it is not possible to update the AZ alive information table 231, on the other hand, the distributed coordinator 230 returns information indicating an isolated state as a response.

(Step S122) The AZ status management unit 222 determines whether the response received from the distributed coordinator 230 indicates that its home AZ is in the isolated state. If the response indicates the isolated state, the process proceeds to step S123. If the response includes the AZ alive information, the process proceeds to step S124.

(Step S123) The AZ status management unit 222 changes the status of the home AZ to indicate the isolated state. For example, the AZ status management unit 222 sets "Isolated" in the AZ Status column with respect to a record (AZ "#1") corresponding to the home AZ in the AZ status table 221. Then, the process proceeds to step S121.

(Step S124) The AZ status management unit 222 selects one of unprocessed AZs from AZs indicated in the obtained AZ alive information.

(Step S125) The AZ status management unit 222 checks the last alive confirmation time of the selected AZ.

(Step S126) The AZ status management unit 222 determines whether a prescribed upper time limit has expired from the checked last alive confirmation time. If the prescribed upper time limit has expired, the process proceeds to step S127. If the prescribed upper time limit has not expired, the process proceeds to step S128.

(Step S127) The AZ status management unit 222 determines that the selected AZ is down, and then updates the alive status and AZ status of the selected AZ. For example, the AZ status management unit 222 sets "Dead" in the Alive Status column with respect to a record corresponding to the selected AZ in the AZ status table 221. In addition, the AZ status management unit 222 sets "Down" in the AZ Status column with respect to the record corresponding to the selected AZ in the AZ status table 221.

(Step S128) The AZ status management unit 222 determines the selected AZ is alive, and then updates the alive status of the selected AZ. For example, the AZ status management unit 222 sets "Alive" in the Alive Status column with respect to the record corresponding to the selected AZ in the AZ status table 221.

(Step S129) The AZ status management unit 222 checks the peer status in the record corresponding to the selected AZ in the AZ status table 221. In this connection, in the case where the selected AZ is the home AZ, the AZ status management unit 222 checks the peer status of all the other AZs in the AZ status table 221.

(Step S130) The AZ status management unit 222 determines whether the checked peer status is "Down." If the checked peer status is "Down," the process proceeds to step S132. If the checked peer status is not "Down," then the process proceeds to step S131.

In this connection, if the selected AZ is the home AZ and at least one of the checked peer status of the other AZs is "Down," the process proceeds to step S132. If the checked peer status of the other AZs is all "Normal," then the process proceeds to step S131.

(Step S131) The AZ status management unit 222 updates the AZ status of the selected AZ. For example, the AZ status management unit 222 sets "Normal" in the AZ Status column with respect to the record corresponding to the selected AZ in the AZ status table 221. Then, the process proceeds to step S135.

(Step S132) The AZ status management unit 222 refers to the alive accompanying information of each AZ included in the obtained AZ alive information.

(Step S133) The AZ status management unit 222 calculates the handling cost for each of the AZs 200 and 300 where the applications 210 and 310 are running, on the basis of the alive accompanying information.

(Step S134) The AZ status management unit 222 determines whether to switch the selected AZ to the alive or down state, on the basis of a comparison between the handling cost of the selected AZ and the handling cost of another AZ, and then updates the AZ status. For example, if the handling cost of the selected AZ is lower than the handling cost of another AZ, the AZ status management unit 222 determines to enable the selected AZ to allow provision of a service by the application. In this case, the AZ status management unit 222 sets "Normal" in the AZ Status column with respect to the record corresponding to the selected AZ in the AZ status table 221. On the other hand, if the handling cost of the selected AZ is higher than or equal to the handling cost of the other AZ, the AZ status management unit 222 determines to disable the selected AZ to stop the provision of the service by the application. In this case, the AZ status management unit 222 sets "Down" in the AZ Status column with respect to the record corresponding to the selected AZ in the AZ status table 221. Then, the process proceeds to step S135.

(Step S135) The AZ status management unit 222 determines whether all the AZs have been processed. If any AZ has not been processed, the process proceeds to step S124. If all the AZs have been processed, the process proceeds to step S121.

As described above, information in the AZ status table 221 is updated occasionally. The information about the AZ status registered in the AZ status table 221 is given to the application 210 in response to an inquiry from the application 210.

The following describes, in detail, how to respond to an inquiry.

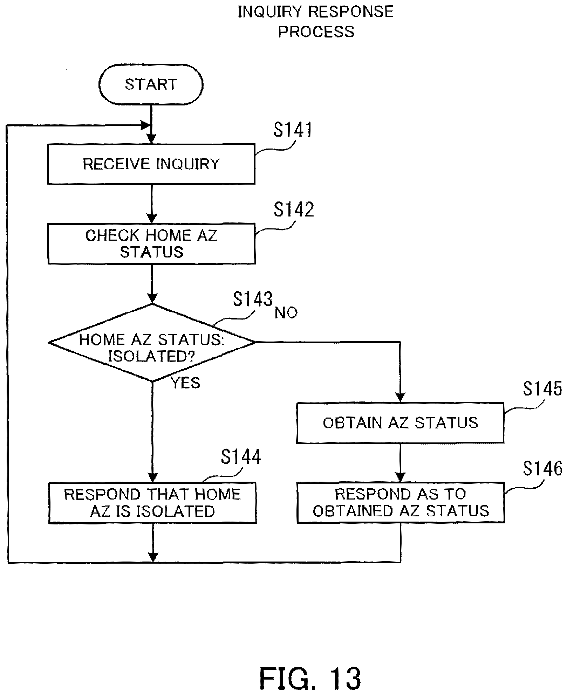

FIG. 13 is a flowchart illustrating an example of an inquiry response process. The process of FIG. 13 will be described step by step.

[Step S141] The inquiry processing unit 224 receives an inquiry from the application 210.

[Step S142] The inquiry processing unit 224 checks the AZ status of its home AZ (AZ "#1") in the AZ status table 221.

[Step S143] The inquiry processing unit 224 determines whether the AZ status of the home AZ is "Isolated." If the AZ status is "Isolated," the process proceeds to step S144. If the AZ status is not "Isolated," the process proceeds to step S145.

[Step S144] The inquiry processing unit 224 gives a response indicating that the home AZ is isolated, to the application 210. Then, the process proceeds to step S141 where the inquiry processing unit 224 waits for the next inquiry. An instance (for example, virtual machine) running the application 210, which has received the response indicating the isolated state to the inquiry, stops the operation of the application 210.

[Step S145] The inquiry processing unit 224 obtains the AZ status of all the AZs from the AZ status table 221.

[Step S146] The inquiry processing unit 224 gives a response indicating the obtained AZ status to the application 210. Then, the process proceeds to step S141 where the inquiry processing unit 224 waits for the next inquiry.

The instance for the application 210, which has received the AZ status of all the AZs, starts to run the application 210 if the AZ status of the home AZ is "Operating," in order to provide a service using the application 210. For example, if the application 210 is active, the instance keeps the application 210 running. If the application 210 is standby, the instance switches the application 210 to active.

In addition, the instance for the application 210, which has received the AZ status of all the AZs, stops the provision of the service by the application 210 if the AZ status of the home AZ is "Down." For example, if the application 210 is active, the instance switches the application 210 to standby. If the application 210 is standby, the instance does nothing.

In the way described above, using such highly available applications in the active-standby configuration provided over the plurality of AZs 200 and 300, it is possible to correctly determine whether to keep or stop a service using each of the applications 210 and 310 in the AZs 200 and 300 when a failure occurs in an AZ.

In the case where a plurality of applications are provided in each AZ, the AZ status determination unit 220 notifies these applications of the same AZ status. Therefore, all the applications in the same AZ are able to make the same decision about whether to keep or stop the service. As a result, it is possible to improve the availability of the system.

In addition, appropriate determination as to which AZ to disable leads to minimizing the handling cost. As a result, it is possible to reduce the operating cost of the system.

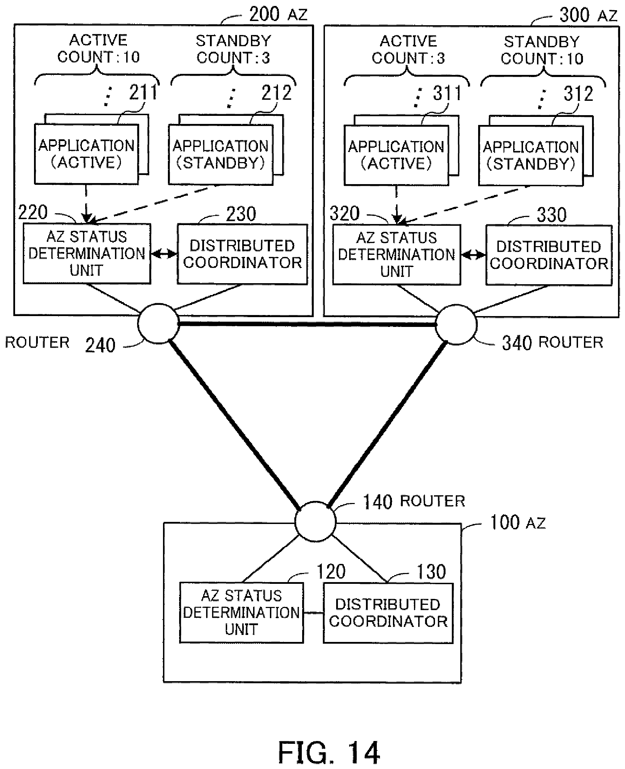

The following describes specific examples of determination with reference to FIGS. 14 to 23.

FIG. 14 illustrates an example of mutual monitoring among AZs. In the example of FIG. 14, the system in the AZ 200 has ten active applications 211 and three standby applications 212. The system in the AZ 300 has three active applications 311 and ten standby applications 312.

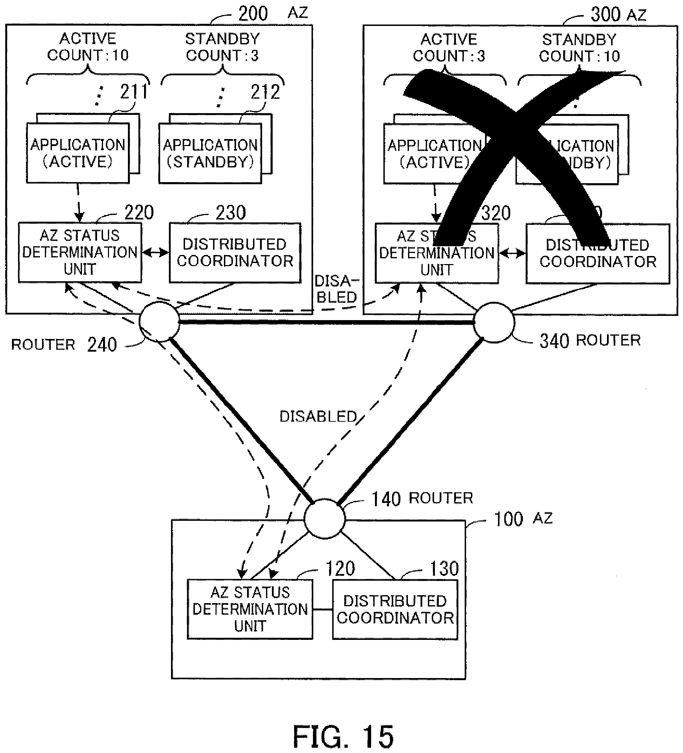

FIGS. 15 to 17 illustrate an example of how to determine AZ status when the entire system in one system stops.

FIG. 15 illustrates an example of a case where an AZ is down. In the example of FIG. 15, the entire system in the AZ 300 stops. As a result, the communication between the AZ 100 and AZ 300 and the communication between the AZ 200 and AZ 300 become disabled. On the other hand, the AZ 100 and AZ 200 are able to communicate with each other normally.

In this case, the distributed coordinator 130 in the AZ 100 is able to confirm the alive state of the system in the AZ 200 but is not able to confirm the alive state of the system in the AZ 300. The AZ status determination unit 120 in the AZ 100 recognizes through peer monitoring that the system in the AZ 200 operates properly and that the system in the AZ 300 has stopped.

Similarly, the distributed coordinator 230 in the AZ 200 is able to confirm the alive state of the system in the AZ 100 but is not able to confirm the alive state of the system in the AZ 300. The AZ status determination unit 220 in the AZ 200 recognizes through peer monitoring that the system in the AZ 100 operates properly and that the system in the AZ 300 has stopped.

For example, the AZ status determination unit 120 in the AZ 100 starts the AZ status determination process (see FIG. 12) in this situation. The AZ status determination unit 120 determines that its home AZ is not isolated, as a result of determining whether the home AZ is isolated ("No" at step S122). Then, with respect to the AZ 100 and AZ 200, the AZ status determination unit 120 determines that an upper time limit has not expired from their last alive confirmation times ("No" at step S126) and that the peer status is Normal ("No" at step S130). On the basis of these determination results, the AZ status determination unit 120 determines that the AZs 100 and 200 are alive, and then updates their AZ status in the AZ status table 121 (step S131). In addition, with respect to the AZ 300, the AZ status determination unit 120 determines that the upper time limit has expired from its last alive confirmation time ("Yes" at step S126). On the basis of this determination result, the AZ status determination unit 120 determines that the AZ 300 is down, and then updates its AZ status in the AZ status table 121 (step S127).

By performing the AZ status determination process, the AZ status determination unit 220 in the AZ 200 obtains the same results at steps S122, S126, and S130 as the AZ status determination unit 120 does. Then, the AZ status determination unit 220 updates the AZ status in the AZ status table 221 on the basis of the determination results. In this connection, since the system in the AZ 300 has stopped, the system in the AZ 300 does not perform the AZ status determination process.

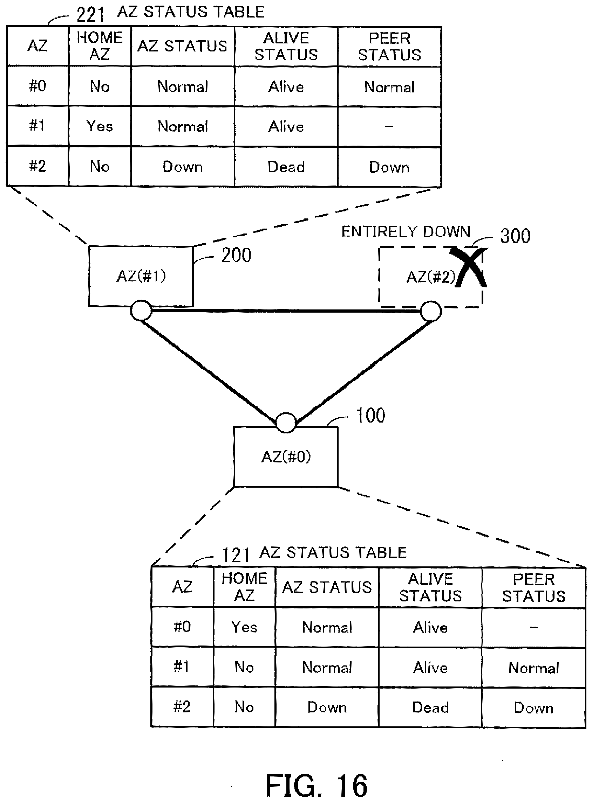

FIG. 16 illustrates an example of AZ status tables in the case where the AZ is down. In the AZ status table 121 in the AZ 100, an alive status of "Alive" and an AZ status of "Normal" are set for the AZ 100 (AZ "#0"), which is the home AZ. An alive status of "Alive," a peer status of "Normal," and an AZ status of "Normal" are set for the AZ 200 (AZ "#1"). An alive status of "Dead," a peer status of "Down," and an AZ status of "Down" are set for the AZ 300 (AZ "#2").

In the AZ status table 221 in the AZ 200, an alive status of "Alive" and an AZ status of "Normal" are set for the AZ 200 (AZ "#1"), which is the home AZ. An alive status of "Alive," a peer status of "Normal," and an AZ status of "Normal" are set for the AZ 100 (AZ "#0"). An alive status of "Dead," a peer status of "Down," and an AZ status of "Down" are set for the AZ 300 (AZ "#2").

Applications are running in the system in the AZ 200, and the AZ status determination unit 220 notifies the applications of the status of each of the AZs 100, 200, and 300 in response to inquiries from the applications.

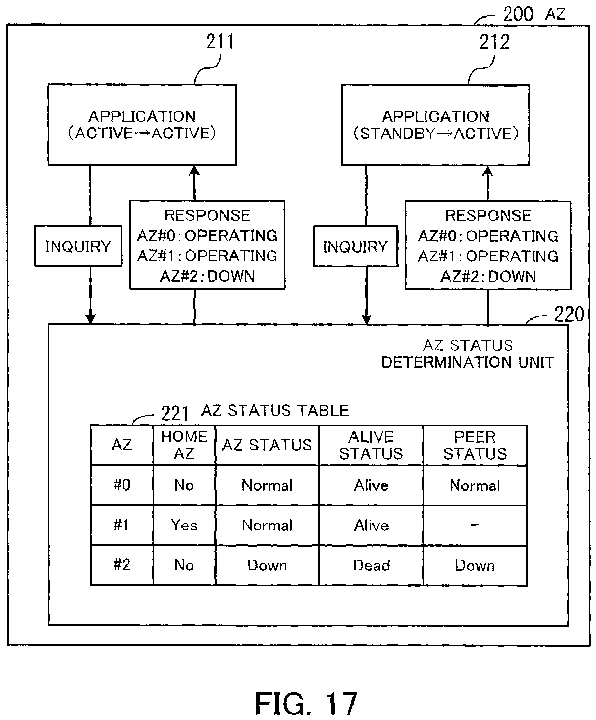

FIG. 17 illustrates an example of notifying applications of AZ status in the case where the AZ is down. When the AZ status determination unit 220 receives an inquiry from an application 211 or 212, it starts the inquiry response process (see FIG. 13). First, the AZ status determination unit 220 checks the AZ status of each AZ in the AZ status table 221, and determines based on the AZ status of its home AZ that the home AZ is not isolated ("No" at step S143). Then, the AZ status determination unit 220 gives a response indicating the status of each of the AZs 100, 200, and 300 registered in the AZ status table 221, to the inquiring application 211 or 212. Referring to the example of FIG. 17, the response indicates that the AZ 100 (AZ "#0") and the AZ 200 (AZ "#1") are operating and the AZ 300 (AZ "#2") is down.

Therefore, the application 211 running as active remains active. In addition, the application 212 running as standby starts to run as active.

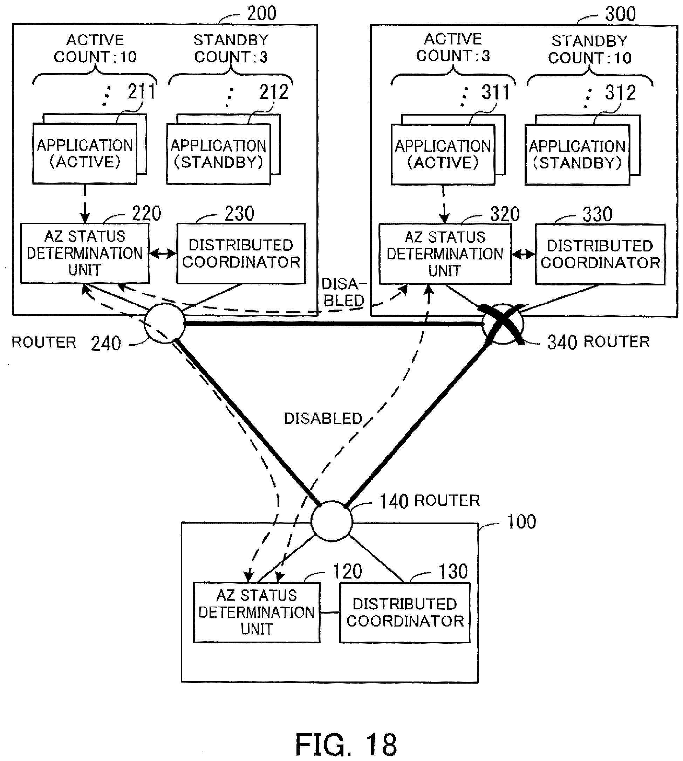

The following describes an example of status determination in the case where a failure occurs in the router in one AZ, with reference to FIGS. 18 to 20.

FIG. 18 illustrates an example of a case where a router fails. In the example of FIG. 18, the router 340 in the AZ 300 fails. As a result, the communication between the AZ 100 and the AZ 300 and the communication between the AZ 200 and the AZ 300 both become disabled. On the other hand, the AZ 100 and AZ 200 are able to communicate with each other normally.

In this case, the distributed coordinator 130 in the AZ 100 is able to confirm the alive state of the system in the AZ 200 but is not able to confirm the alive state of the system in the AZ 300. The AZ status determination unit 120 in the AZ 100 recognizes through peer monitoring that the system in the AZ 200 operates properly and the system in the AZ 300 has stopped.

Similarly, the distributed coordinator 230 in the AZ 200 is able to confirm the alive state of the system in the AZ 100 but is not able to confirm the alive state of the system in the AZ 300. The AZ status determination unit 220 in the AZ 200 recognizes through peer monitoring that the system in the AZ 100 operates properly and the system in the AZ 300 has stopped.

The distributed coordinator 330 in the AZ 300 is not able to confirm the alive state of either system in the AZ 100 and AZ 200. The AZ status determination unit 320 recognizes through peer monitoring that both the system in the AZ 100 and the system in the AZ 200 have stopped.

In the above situation, the AZ status determination unit 120 in the AZ 100 and the AZ status determination unit 220 in the AZ 200 obtain the same results of the AZ status determination process (see FIG. 12) as obtained in the case where an AZ is down (see FIGS. 15 and 16).

The AZ status determination unit 320 in the AZ 300 starts the AZ status determination process. The AZ status determination unit 320 determines that its home AZ is isolated, as a result of determining whether the home AZ is isolated ("Yes" at step S122) . Then, the AZ status determination unit 320 updates the AZ Status column in the AZ status table 321 so as to indicate the isolated state as the AZ status of the home AZ (step S123).

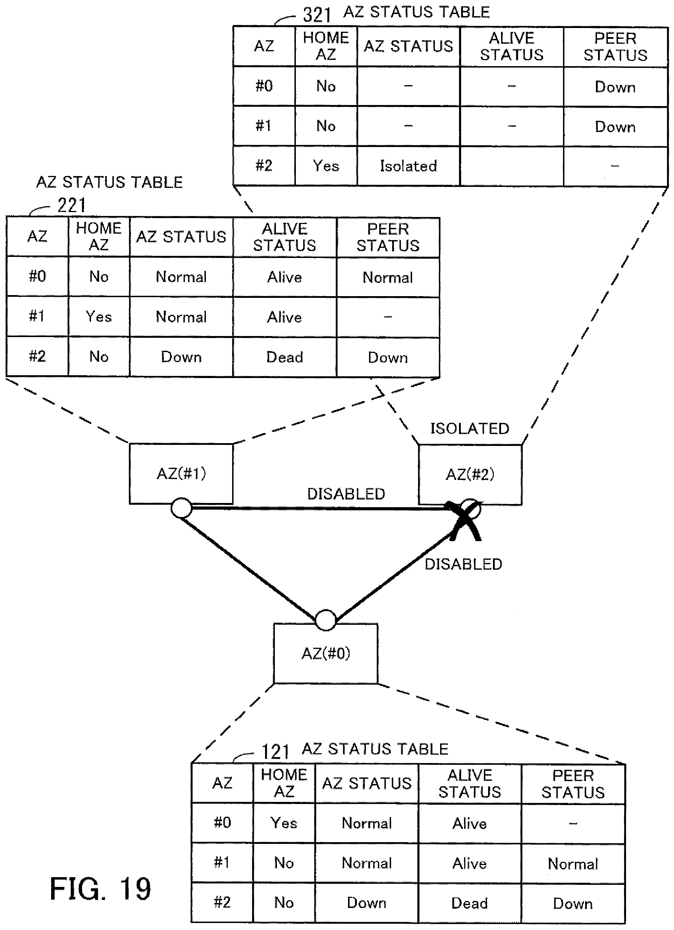

FIG. 19 illustrates an example of AZ status tables in the case where the router fails. The AZ status table 121 in the AZ 100 and the AZ status table 221 in the AZ 200 have the same information as the example of FIG. 16.

In the AZ status table 321 in the AZ 300, an AZ status of "Isolated" is set for the AZ 300 (AZ "#2"), which is the home AZ. A peer status of "Down" is set for the AZ 100 (AZ "#0") and a peer status of "Down" is set for the AZ 200 (AZ "#1").

Applications are running in the systems in the AZs 200 and 300, and the AZ status determination units 220 and 320 notify the corresponding applications of the status of each of the AZs 100, 200, and 300 in response to inquiries from the applications.

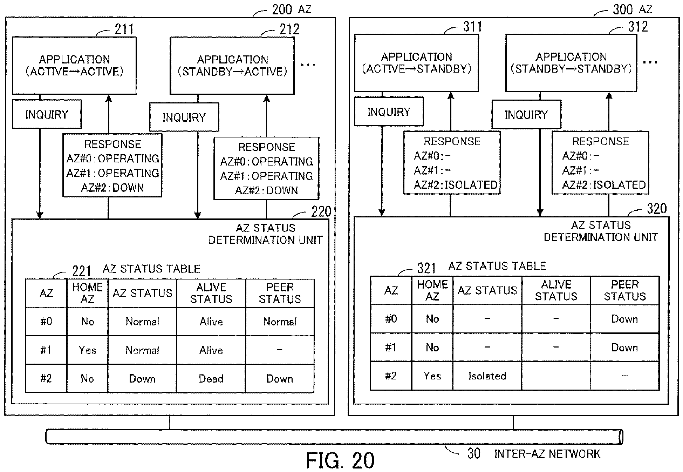

FIG. 20 illustrates an example of notifying applications of AZ status in the case where the router fails. In response to inquiries from the applications 211 and 212, the AZ status determination unit 220 gives responses having the same content as illustrated in the example of FIG. 17.

When receiving an inquiry from an application 311 or 312, the AZ status determination unit 320 in the AZ 300 starts the inquiry response process (see FIG. 13). The AZ status determination unit 320 checks the AZ status of each AZ in the AZ status table 321, and determines based on the AZ status of its home AZ that the home AZ is isolated ("Yes" at step S143). Then, the AZ status determination unit 320 gives a response indicating that the AZ 300 is isolated, to the inquiring application 311 or 312.

According to the responses illustrated in FIG. 20, in the AZ 200, the application 211 running as active remains active, and the application 212 running as standby starts to run as active. In the AZ 300, the application 311 running as active becomes standby, thereby stopping providing a service. In addition, the application 312 running as standby remains standby.

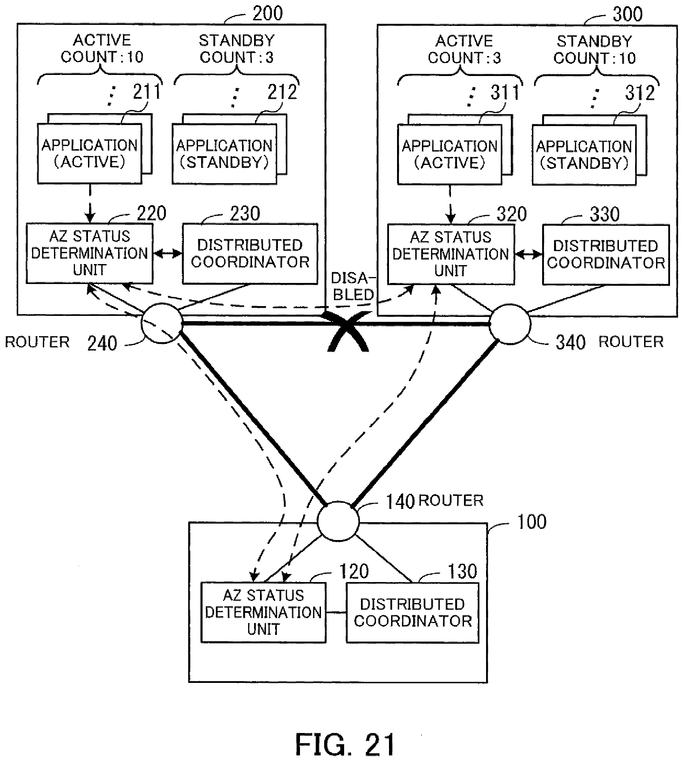

The following describes an example of status determination in the case where a failure occurs in a communication channel between two AZs and thus communication between these AZs becomes disabled, with reference to FIGS. 21 to 23.

FIG. 21 illustrates an example of a case where a failure occurs in a communication channel between AZs. In the example of FIG. 21, a failure occurs in a communication channel between the AZ 200 and the AZ 300. As a result, the communication between the AZ 200 and the AZ 300 becomes disabled. The AZ 100 and AZ 200 are able to communicate with each other normally and the AZ 100 and AZ 300 are able to communicate with each other normally.

The distributed coordinators 130, 230, and 330 in the AZs 100, 200, and 300 exchange information through available communication channels to synchronize AZ alive information with each other. By doing so, the distributed coordinator 230 is able to confirm the alive state of the system in the AZ 300 via the distributed coordinator 130. Similarly, the distributed coordinator 330 is able to confirm the alive state of the system in the.AZ 200 via the distributed coordinator 130.

In this case, the distributed coordinator 130 in the AZ 100 is able to confirm the alive state of the system in the AZ 200 and the alive state of the system in the AZ 300. The AZ status determination unit 120 in the AZ 100 confirms through peer monitoring that the system in the AZ 200 and the system in the AZ 300 operate properly.

The distributed coordinator 230 in the AZ 200 is able to confirm the alive state of the system in the AZ 100 and the alive state of the system in the AZ 300. On the other hand, the AZ status determination unit 220 in the AZ 200 recognizes through the peer monitoring that the system in the AZ 100 operates properly and the system in the AZ 300 has stopped.

The distributed coordinator 330 in the AZ 300 is able to confirm the alive state of the system in the AZ 100 and the alive state of the system in the AZ 200. On the other hand, the AZ status determination unit 320 in the AZ 300 recognizes through the peer monitoring that the system in the AZ 100 operates properly and the system in the AZ 200 has stopped.

For example, the AZ status determination unit 120 in the AZ 100 starts the AZ status determination process (see FIG. 12) in the above situation. The AZ status determination unit 120 determines that its home AZ is not isolated, as a result of determining whether the home AZ is isolated ("No" at step S122). Then, with respect to all the AZs 100, 200, and 300, the AZ status determination unit 120 determines that the upper time limit has not expired from their last alive confirmation times ("No" at step S126) and that the peer status is Normal ("No" at step S130). On the basis of these determination results, the AZ status determination unit 120 determines that the AZs 100, 200, and 300 are alive, and then updates the AZ status in the AZ status table 121 (step S131).

The AZ status determination unit 220 in the AZ 200 starts the AZ status determination process (see FIG. 12). The AZ status determination unit 220 determines that its home AZ is not isolated, as a result of determining whether the home AZ is isolated ("No" at step S122). Then, with respect to all the AZs 100, 200, and 300, the AZ status determination unit 220 determines that the upper time limit has not expired from their last alive confirmation times ("No" at step S126).

Also, the AZ status determination unit 220 determines that the peer status is Normal with respect to the AZ 100 ("No" at step S130). Therefore, the AZ status determination unit 220 determines that the AZ 100 is alive, and then updates the AZ status in the AZ status table 221 (step S131).

In addition, the AZ status determination unit 220 determines that the peer status is down with respect to the AZs 200 and 300 ("Yes" at step S130). In this case, the AZ status determination unit 220 calculates the handling cost for each of the AZs 200 and 300 on the basis of the alive accompanying information of the AZ 200 and the alive accompanying information of the AZ 300 (step S133). For example, on the basis of the number of applications running as standby (standby count), the cost for switching the standby applications to active is calculated as the handling cost. Referring to the example of FIG. 21, the standby count of the AZ 200 is "3," and the standby count in the AZ 300 is "10." Therefore, the AZ 300 has higher handling cost than the AZ 200. Therefore, the AZ status determination unit 220 determines to switch the AZ 200 with lower handling cost to the alive state and to switch the AZ 300 with higher handling cost to the down state, and then updates the AZ status in the AZ status table 221 (Step S134).

In the AZ status determination process, the AZ status determination unit 320 in the AZ 300 obtains the same determination results at steps S122, S126, and S130 as the AZ status determination unit 220 does. As in the AZ status determination unit 220, the AZ status determination unit 320 also determines to switch the AZ 200 to the alive state and the AZ 300 to the down state, on the basis of the handling cost of the AZs 200 and 300, and then updates the AZ status in the AZ status table 321 (Step S134).

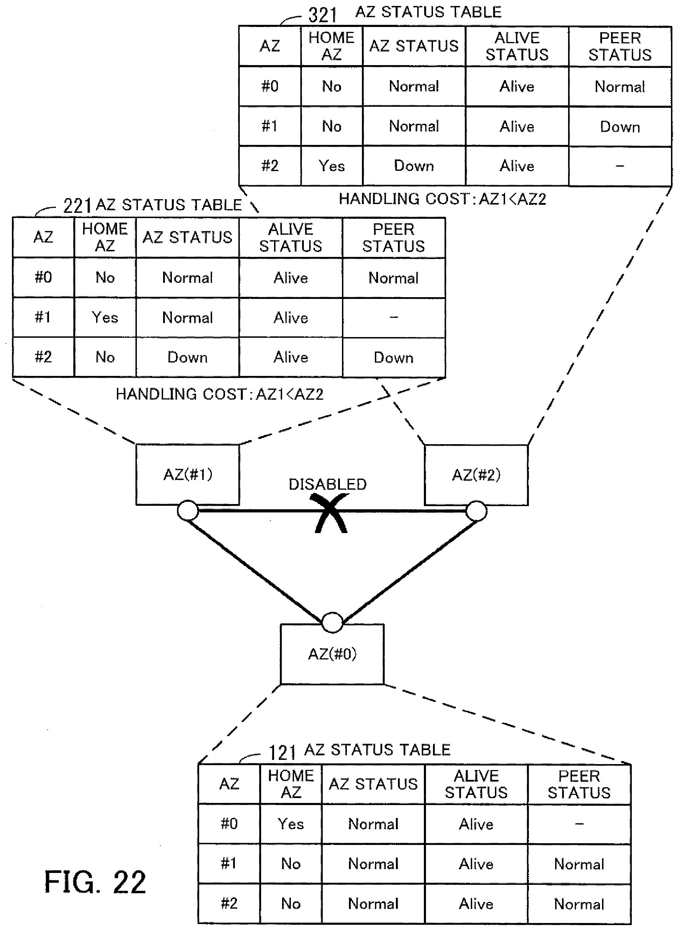

FIG. 22 illustrates an example of AZ status tables in the case where the failure occurs in the communication channel between the AZs. In the AZ status table 121 in the AZ 100, an alive status of "Alive" and an AZ status of "Normal" are set for the AZ 100 (AZ "#0"), which is the home AZ. An alive status of "Alive," a peer status of "Normal," and an AZ status of "Normal" are set for the AZ 200 (AZ "#1"). An alive status of "Alive," a peer status of "Normal," and an AZ status of "Normal" are set for the AZ 300 (AZ "#2").

In the AZ status table 221 in the AZ 200, an alive status of "Alive" and an AZ status of "Normal" are set for the AZ 200 (AZ "#1"), which is the home AZ. An alive status of "Alive," a peer status of "Normal," and an AZ status of "Normal" are set for the AZ 100 (AZ "#0"). An alive status of "Alive," a peer status of "Down," and an AZ status of "Down" are set for the AZ 300 (AZ "#2").

In the AZ status table 321 in the AZ 300, an alive status of "Alive" and an AZ status of "Down" are set for the AZ 300 (AZ "#2"), which is the home AZ. An alive status of "Alive," a peer status of "Normal," and an AZ status of "Normal" are set for the AZ 100 (AZ "#0"). An alive status of "Alive," a peer status of "Down," and an AZ status of "Normal" are set for the AZ 200 (AZ "#1").

Applications are running in the systems in the AZs 200 and 300, and the AZ status determination units 220 and 320 notify the corresponding applications of the status of each of the AZs 100, 200, and 300 in response to inquiries from the applications.

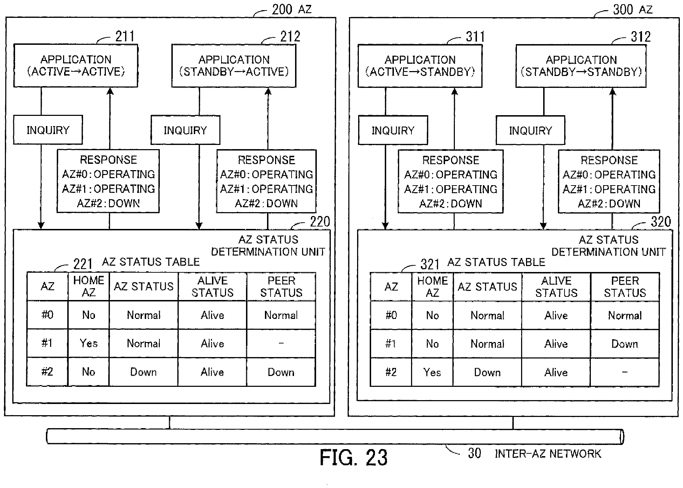

FIG. 23 illustrates an example of notifying applications of AZ status in the case where the failure occurs in the communication channel between the AZs. The AZ status determination units 220 and 320 each start the inquiry response process (see FIG. 13) when receiving inquiries from their corresponding applications 211, 212, 311, and 312. First, the AZ status determination units 220 and 320 check the AZ status of each AZ in the corresponding AZ status tables 221 and 321, and determine that their home AZ is not isolated ("No" at step S143), on the basis of the AZ status of the home AZ. Therefore, the AZ status determination units 220 and 320 give responses indicating the AZ status of each of the AZs 100, 200, and 300 registered in the corresponding AZ status tables 221 and 321 to the inquiring applications 211, 212, 311, and 312. Referring to the example of FIG. 23, the responses indicate that the AZ 100 (AZ "#0") and AZ 200 (AZ "#1") are operating and the AZ 300 (AZ "#2") is down.

Thereby, in the system in the AZ 200, the application 211 running as active remains active. In addition, the application 212 running as standby starts to run as active. On the other hand, in the system in the AZ 300, the application 311 running as active becomes standby, thereby stopping providing a service. The application 312 running as standby remains standby.

As described above, in the second embodiment, the alive status confirmation by the distributed coordinators 130, 230, and 330 and the peer monitoring are both performed. As a result, it is possible to correctly determine the AZ status while the AZs 200 and 300 are not able to communicate with each other, as illustrated in FIG. 21. In addition, it is possible to notify each application of the correct AZ status.

For example, assume that only the distributed coordinators 130, 230, and 330 are used. In this case, it is not possible to detect the occurrence of a communication failure, as seen from the Alive Status column in each of the AZ status tables 121, 221, and 321 of FIG. 22. Therefore, it is not possible to notify the applications running in the AZs 200 and 300 of the occurrence of the communication failure. As a result, the applications may fail to perform processing properly.

For example, assume that mirroring is performed to copy data stored in a database for the application 211 running as active in the AZ 200 to a database for the application 311 running as standby in the AZ 300. If communication between the AZs 200 and 300 becomes disabled, the application 211 is not able to send the data to be written in the database, to the application 311. If the application 211 is not notified that the communication is disabled, the application 211 may make repeated attempts to send the data, and does not make a transition to a fallback state immediately. The fallback state is a state where the application gives up the mirroring and starts to operate in a state without redundancy.

The peer monitoring enables detecting disabled communication between the AZs 200 and 300 among the AZs. Then, the application 211 in the AZ 200 is notified of the AZ 300 being down, so as to make a transition to the fallback state immediately.

By not only carrying out the peer monitoring but also using the distributed coordinators 130, 230, and 330, it is possible to mutually exchange alive accompanying information via the AZ 100 even when the communication between the AZs 200 and 300 is disabled. As a result, each of the AZ status determination units 220 and 320 is able to appropriately determine which of the AZ 200 and AZ 300 to switch to the alive state and which of them to switch to the down state. For example, it is possible to calculate the handling cost for each AZ, and to enable an AZ with lower handling cost and disable an AZ with higher handling cost.

In addition, since the AZ status determination units 220 and 320 determine which AZ to switch to the alive state, using the same alive accompanying information and the same algorithm, they are able to obtain the same determination results even when they individually make the determination. As a result, unified control is exercised on the entire system over a plurality of AZs 100, 200, and 300.

In addition, in the second embodiment, the AZ status determination units 220 and 320 determine AZ status and notify applications of the determination result, so that a plurality of applications in the same AZ are able to take consistent troubleshooting. This improves the availability of the system. That is to say, if the plurality of applications do not take consistent troubleshooting, they may fail to perform interactive processing properly. For example, assume now that an application a and an application b are running as active in interaction with each other in the AZ 200. The application a and application b are running as standby in the AZ 300. Consider the case where communication between the AZ 200 and the AZ 300 becomes disabled. In this case, if the applications individually determine which to run as active, the application a in the AZ 200 may run as active and the application b in the AZ 300 may run as active. While the communication between the AZ 200 and the AZ 300 is disabled, the application a and application b are not able to perform the interactive processing. This situation loses the availability. By contrast, in the second embodiment, all applications use the same results of AZ status determination performed by the AZ status determination units 220 and 320, and each application determines which AZ to keep operating. This approach makes it possible that a plurality of applications that perform interactive processing make the same decision as to which AZ to enable to run the applications as active in that AZ, thereby improving the availability.

### (Third Embodiment)

A third embodiment will now be described. In the third embodiment, an inquiry from an application includes information about AZs used by the application. The AZs used by the application are, for example, an AZ where the application is running and an AZ where another application that cooperates with the application is running. For example, two applications, one of which runs as active and the other of which runs as standby, cooperate with each other. These applications use AZs where the applications are running. If an application makes an inquiry including information about the AZs used by the application, an AZ status determination unit is able to return minimum information as a response to the inquiry.

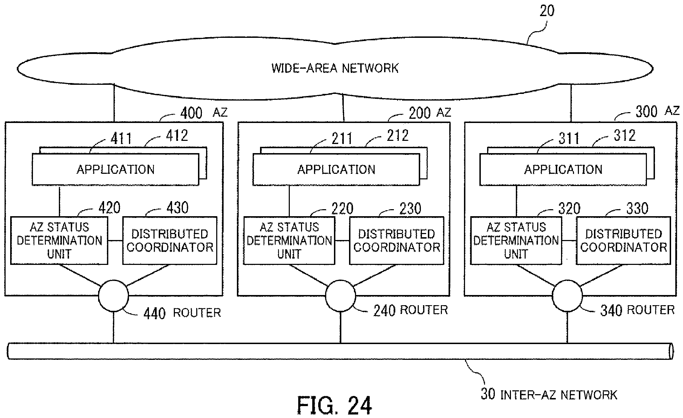

FIG. 24 illustrates an example of a system configuration according to the third embodiment. In the third embodiment, an AZ 400 is provided, in place of the AZ 100 of the second embodiment. A system in the AZ 400 is connected to a wide-area network 20 and an inter-AZ network 30. The AZ 400 has a plurality of applications 411 and 412, an AZ status determination unit 420, a distributed coordinator 430, and a router 440.

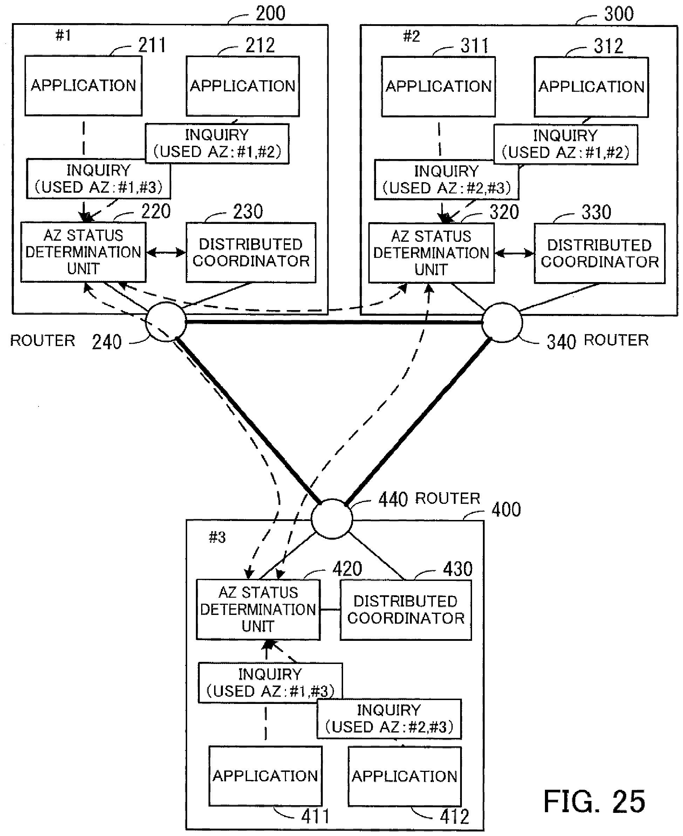

FIG. 25 illustrates an example of communicating information between constitutional elements of systems in AZs according to the third embodiment. AZ status determination units 220, 320, and 420 access distributed coordinators 230, 330, and 430, respectively, to obtain AZ alive information. The AZ status determination units 220, 320, and 420 perform peer monitoring over the inter-AZ network 30. In response to inquiries from applications 211, 212, 311, 312, 411, and 412, the AZ status determination units 220, 320, and 420 give responses about the status of AZs used by the inquiring applications.

An inquiry from each of the applications 211, 212, 311, 312, 411, and 412 includes information indicating AZs used by the application. For example, it is assumed that the AZ 200 has an identification number of "#1," the AZ 300 has an identification number of "#2," and the AZ 400 has an identification number of "#3." For example, the application 211 uses the AZ 200 and the AZ 400. In this case, the application 211 makes an inquiry including information "#1, #3" identifying the used AZs to the AZ status determination unit 220.

The AZ status determination units 220, 320, and 420 of the third embodiment perform the AZ status determination process in the same way as that performed in the second embodiment and illustrated in FIG. 12. The third embodiment has a different inquiry response process from the second embodiment.

The following describes in detail the inquiry response process of the third embodiment, assuming that an inquiry processing unit 224 (see FIG. 7) in the AZ status determination unit 220 responds to an inquiry.

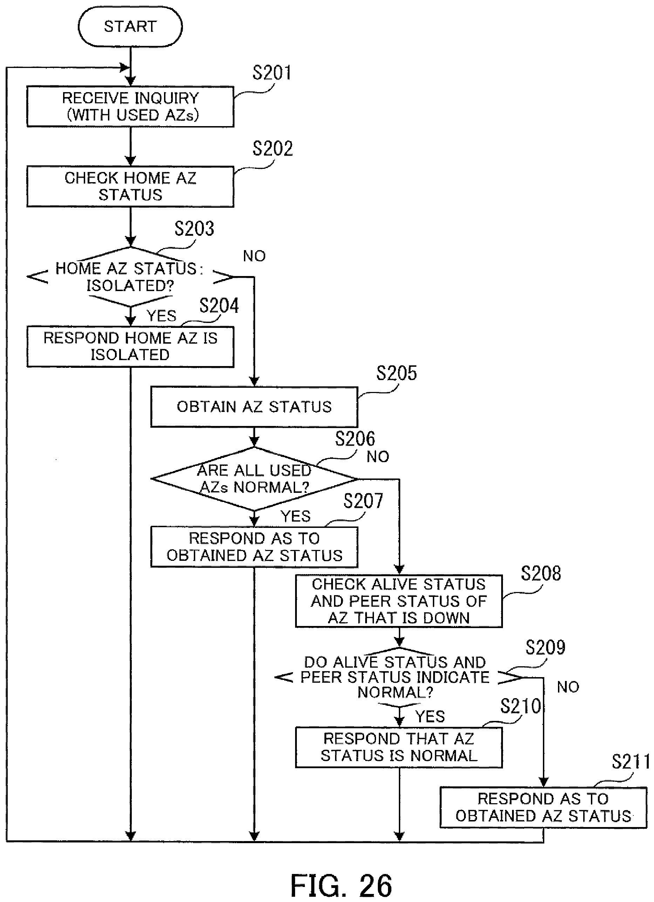

FIG. 26 is a flowchart illustrating an inquiry response process according to the third embodiment. Hereinafter, the process illustrated in FIG. 26 will be described step by step.

(Step S201) The inquiry processing unit 224 receives an inquiry including information identifying used AZs from an application 211 or 212.

(Step S202) The inquiry processing unit 224 checks the AZ status of its home AZ (AZ "#1") in the AZ status table 221.

(Step S203) The inquiry processing unit 224 determines whether the AZ status of the home AZ is "Isolated." If it is "Isolated," the process proceeds to step S204. If it is not "Isolated," the process proceeds to step S205.

(Step S204) The inquiry processing unit 224 gives a response indicating that the home AZ is isolated, to the application 210. Then, the process proceeds to step S201 where the inquiry processing unit 224 waits for the next inquiry.

(Step S205) The inquiry processing unit 224 obtains the AZ status of all AZs from the AZ status table 221.

(Step S206) The inquiry processing unit 224 determines whether the AZ status of all the used AZs included in the inquiry is Normal. If the AZ status of all the used AZs are Normal, the process proceeds to step S207. If the AZ status of at least one used AZ is Down, the process proceeds to step S208.

(Step S207) The inquiry processing unit 224 gives a response indicating the obtained AZ status, to the application 210. Then, the process proceeds to step S201 where the inquiry processing unit 224 waits for the next inquiry.

(Step S208) The inquiry processing unit 224 checks the alive status and peer status of the AZ whose AZ status is Down, in the AZ status table 221.

(Step S209) The inquiry processing unit 224 determines whether the checked alive status and peer status both indicate normal (i.e., alive status of "Alive" and peer status of "Normal") . If they both indicate normal, the processing proceeds to step S210. At least one of them does not indicate normal, the process proceeds to step S211.

(Step S210) The inquiry processing unit 224 gives a response indicating that the AZ status of the AZs used by the application is Normal, to the inquiring application. Then, the process proceeds to step S201 where the inquiry processing unit 224 waits for the next inquiry.

(Step S211) The inquiry processing unit 224 gives a response indicating the obtained AZ status, to the application 210. That is, the inquiry processing unit 224 gives the AZ status indicating that at least one of the AZs used by the inquiring application is down, to the application. Then, the process proceeds to step S201 where the inquiry processing unit 224 waits for the next inquiry.

As described above, even in the case where the AZ status of at least one of the used AZs is Down, the status of the AZ is determined as normal if the alive status and peer status of the AZ both indicate normal, and then this determination is given to the application. Therefore, if a communication channel between two AZs is disconnected and the AZ status of one of the AZs is determined to be Down, information indicating that the AZ is normal is given to applications that do not use the disconnected communication channel, even though the AZ is determined to be down. As a result, the applications that do not use the disconnected communication channel is able to keep running as before, without a transition to the fallback state.

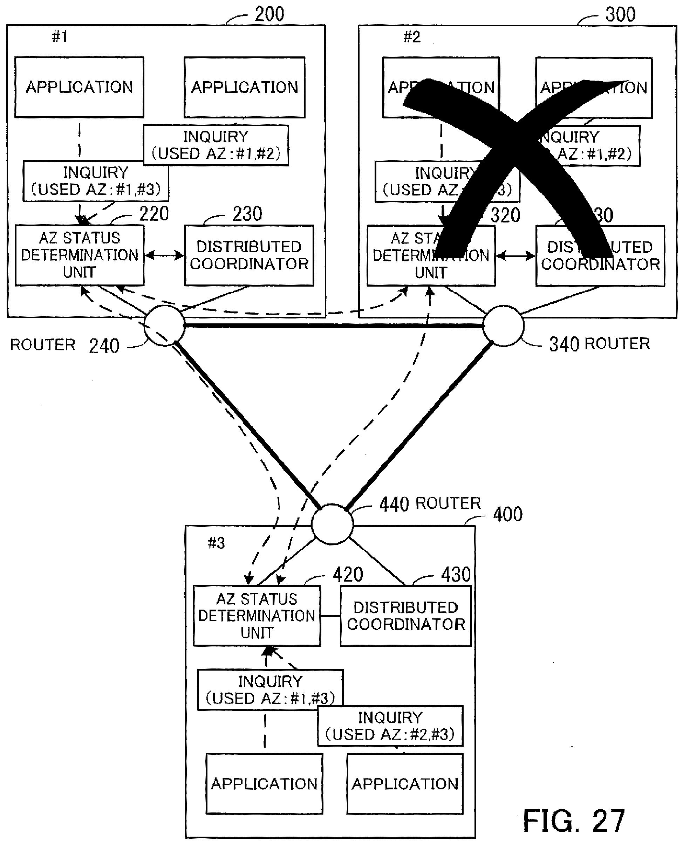

An example of status determination in the case where the entire system in one AZ stops will be illustrated in FIGS. 27 to 29.

FIG. 27 illustrates an example of a case where an AZ is down. In the example of FIG. 27, the entire system in the AZ 300 stops. As a result, both the communication between the AZ 200 and the AZ 300 and the communication between the AZ 300 and the AZ 400 become disabled. The AZ 200 and AZ 400 are able to communicate with each other normally. In the above situation, the AZ status determination units 220 and 420 perform the AZ status determination process and register the determination results in the corresponding AZ status tables 221 and 421.

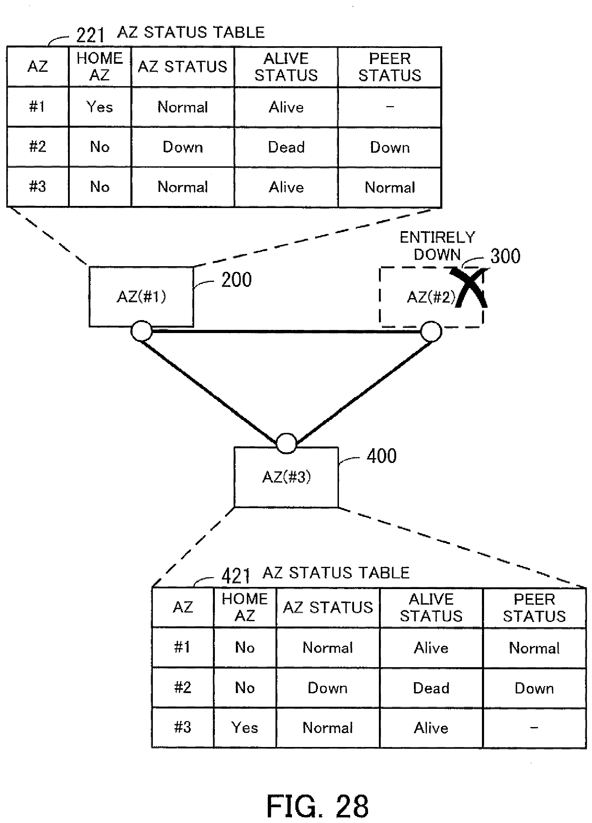

FIG. 28 illustrates an example of AZ status tables in the case where the AZ is down. In the AZ status table 221 in the AZ 200, an alive status of "Alive" and an AZ status of "Normal" are set for the AZ 200 (AZ "#1"), which is the home AZ. An alive status of "Dead," a peer status of "Down," and an AZ status of "Down" are set for the AZ 300 (AZ "#2"). An alive status of "Alive," a peer status of "Normal," and an AZ status of "Normal" are set for the AZ 400 (AZ "#3").

In the AZ status table 421 in the AZ 400, an alive status of "Alive" and an AZ status of "Normal" are set for the AZ 400 (AZ "#3"), which is the home AZ. An alive status of "Alive," a peer status of "Normal," and an AZ status of "Normal" are set for the AZ 200 (AZ "#1"). An alive status of "Dead," a peer status of "Down," and an AZ status of "Down" are set for the AZ 300 (AZ "#2").

The AZ status determination units 220 and 420 respond to inquiries from the corresponding applications, with reference to the corresponding AZ status tables 221 and 421.

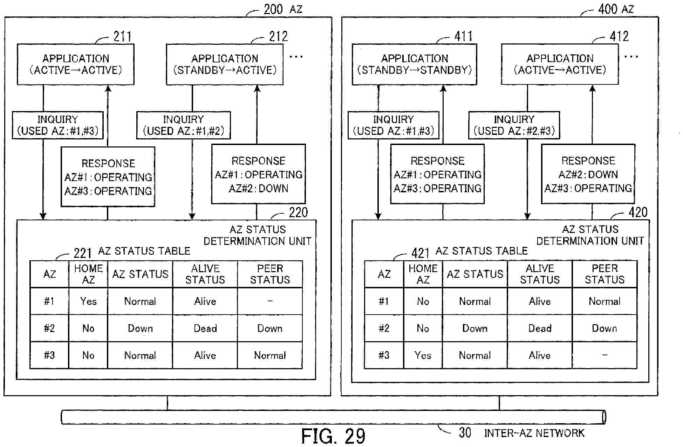

FIG. 29 illustrates an example of notifying applications of AZ status in the case where the AZ is down. When receiving an inquiry from the application 211, the AZ status determination unit 220 starts the inquiry response process (see FIG. 26). The inquiry from the application 211 specifies the AZ 200 with identification number of "#1" and the AZ 400 with identification number "#3" as used AZs. The AZ status determination unit 220 checks the AZ status of each AZ in the AZ status table 221 and determines based on the AZ status of its home AZ that the home AZ is not isolated ("No" at step S203). In addition, the AZ status determination unit 220 determines based on the status of the used AZs that all the used AZs are normal, ("Yes" at step S206). Therefore, the AZ status determination unit 220 gives a response indicating the AZ status of the AZs 200 and 400 obtained from the AZ status table 221, to the inquiring application 211. Referring to the example of FIG. 29, the response indicates that the AZ 200 (AZ "#1") and AZ 400 (AZ "#3") are operating.

The AZ status determination unit 220 receives an inquiry specifying the AZ 200 with identification number of "#1" and the AZ 300 with identification number "#2" as used AZs from the application 212. The AZ status determination unit 220 checks the AZ status of each AZ in the AZ status table 221 and determines based on the AZ status of its home AZ that the home AZ is not isolated ("No" at step S203). In addition, the AZ status determination unit 220 determines based on the status of the used AZs that part of the used AZs, i.e., the AZ 300 is not normal ("No" at step S206). In addition, the AZ status determination unit 220 checks the alive status and peer status of the AZ 300 whose AZ status is Down, and recognizes that the peer status is Down ("No" at step S209). Therefore, the AZ status determination unit 220 gives a response indicating the AZ status of the AZs 200 and 300 obtained from the AZ status table 221, to the inquiring application 212. Referring to the example of FIG. 29, the response indicating that the AZ 200 (AZ "#1") is operating and the AZ 300 (AZ "#2") is down.

When receiving an inquiry specifying the AZ 200 with identification number of "#1" and the AZ 400 with identification number "#3" as used AZs from the application 411, the AZ status determination unit 420 starts the inquiry response process. The AZ status determination unit 420 performs this process in the same way as the AZ status determination unit 220 does to respond to an inquiry from the application 211. Finally, the AZ status determination unit 420 gives a response indicating that the AZ 200 (AZ "#1") and AZ 400 (AZ "#3") are operating, to the inquiry.

When receiving an inquiry specifying the AZ 300 with identification number of "#2" and the AZ 400 with identification number "#3" as used AZs from the application 412, the AZ status determination unit 420 starts the inquiry response process. The AZ status determination unit 420 performs this process in the same way as the AZ status determination unit 220 does to respond to an inquiry from the application 212. Finally, the AZ status determination unit 420 gives a response indicating that the AZ 300 (AZ "#2") is down and the AZ 400 (AZ "#3") are operating, to the inquiry.

As a result, the standby application 212 that uses the disabled AZ 300 starts to run as active.

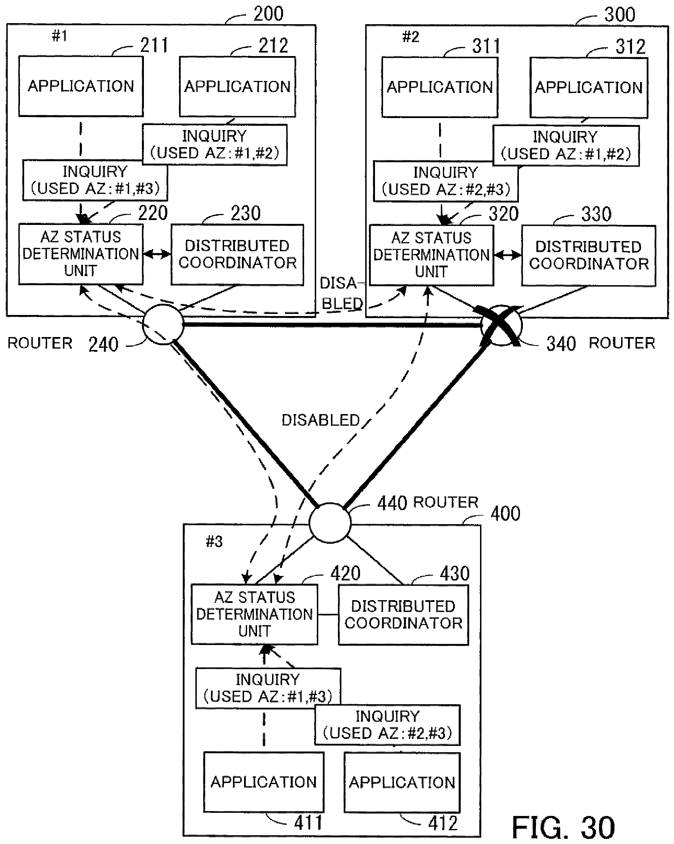

The following describes an example of status determination in the case where a failure occurs in a router of one AZ, with reference to FIGS. 30 to 32.

FIG. 30 illustrates an example of a case where a router fails. In the example of FIG. 30, the router 340 in the AZ 300 fails. As a result, both the communication between the AZ 200 and the AZ 300 and the communication between the AZ 300 and the AZ 400 are disabled. The AZ 200 and AZ 400 are able to communicate with each other normally. Under this situation, the AZ status determination units 220, 320, and 420 perform the AZ status determination process and register the determination results in the corresponding AZ status tables 221, 321, and 421.

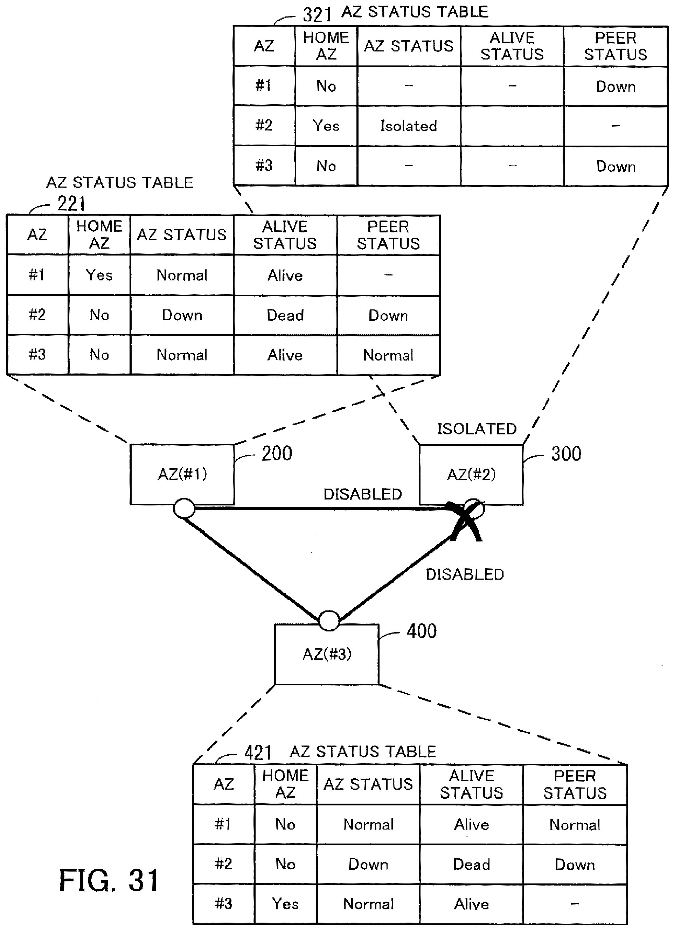

FIG. 31 illustrates an example of AZ status tables in the case where the router fails. The AZ status table 221 in the AZ 200 and the AZ status table 421 in the AZ 400 contain the same information as illustrated in FIG. 28.

In the AZ status table 321 in the AZ 300, an AZ status of "Isolated" is set for the AZ 300 (AZ "#2"), which is the home AZ. A peer status of "Down" is set for the AZ 200 (AZ "#1"). A peer status of "Down" is set for the AZ 400 (AZ "#3").

Applications are running in the systems in the AZs 200, 300, and 400, and the AZ status determination units 220, 320, and 420 notify the corresponding applications of the status of each of the AZs 200, 300, and 400 in response to inquiries from the applications.

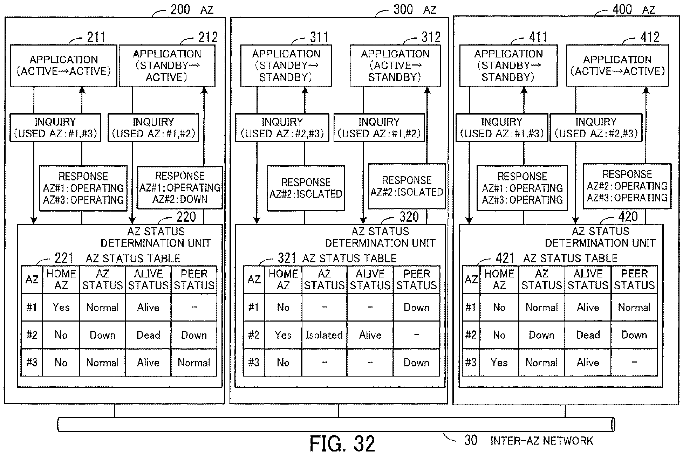

FIG. 32 illustrates an example of notifying applications of AZ status in the case where the router fails. The AZ status determination units 220 and 420 give responses having the same content as illustrated in the example of FIG. 29, to inquiries from the corresponding applications 211, 212, 411, and 412.

When receiving an inquiry from an application 311 or 312 the AZ status determination unit 320 in the AZ 300 starts the inquiry response process (see FIG. 26). The inquiry from the application 311 specifies the AZ 300 with identification number of "#2" and the AZ 400 with identification number of "#3" as used AZs. The inquiry from the application 312 specifies the AZ 200 with identification number of "#1" and the AZ 300 with identification number of "#2" as used AZs. The AZ status determination unit 320 checks the AZ status of each AZ in the AZ status table 321 and determines based on the AZ status of its home AZ that the home AZ is isolated ("Yes" at step S203). Therefore, the AZ status determination unit 320 gives information indicating that the AZ 300 is isolated, as a response to the inquiring application 311 or 312.

According to the responses illustrated in FIG. 32, in the AZ 300, the application 312 running as active becomes standby, thereby stopping providing a service. In addition, the application 311 running as standby remains standby. The applications 211, 212, 411, and 412 running in the AZs 200 and 400 change their states as in the example of FIG. 29.

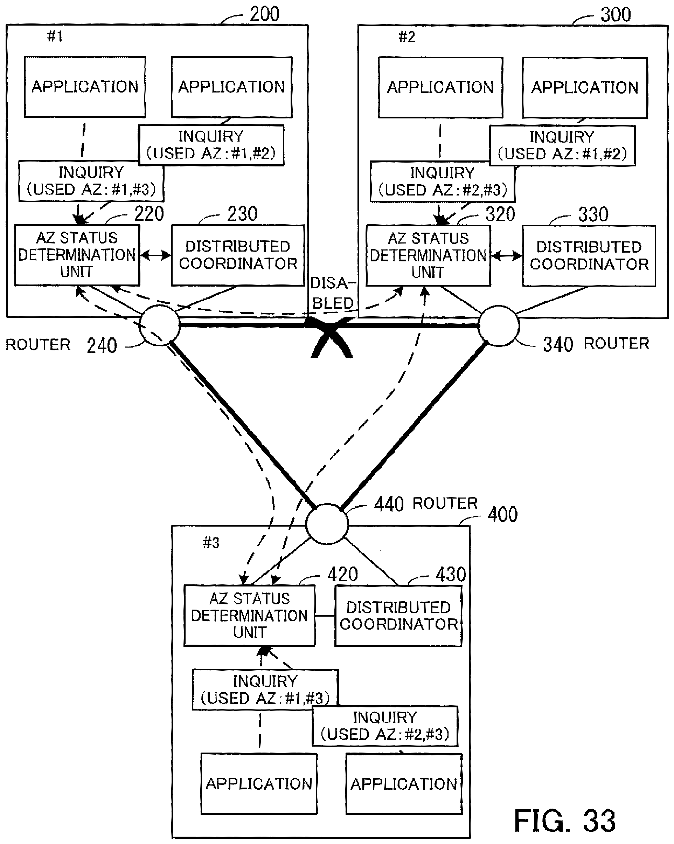

The following describes an example of status determination in the case where a failure occurs in a communication channel between two AZs and communication between the AZs thus becomes disabled, with reference to FIGS. 33 to 35.

FIG. 33 illustrates an example of a case where a failure occurs in a communication channel between AZs. In the example of FIG. 33, a failure occurs in the communication channel between the AZ 200 and the AZ 300. As a result, the communication between the AZ 200 and the AZ 300 becomes disabled. The AZ 200 and AZ 400 are able to communicate with each other normally and the AZ 300 and AZ 400 are also able to communicate with each other normally. Under this situation, the AZ status determination units 220, 320, and 420 perform the AZ status determination process and register the determination results in the corresponding AZ status tables 221, 321, and 421.

In this connection, it is assumed that the handling cost for switching the AZ 200 to the alive state is lower than that for switching the AZ 300 to the alive state.

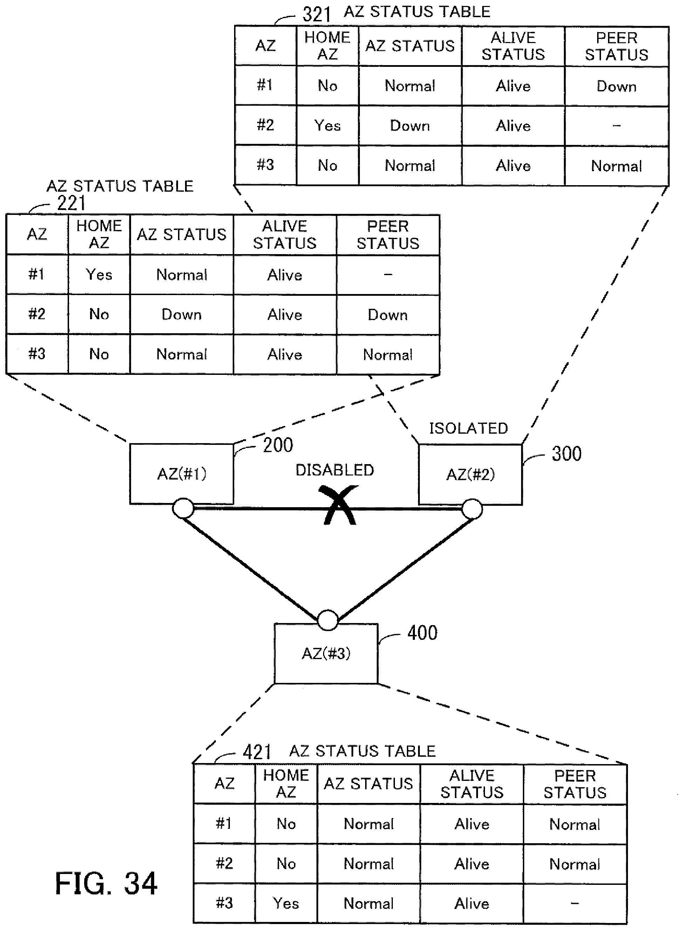

FIG. 34 illustrates an example of AZ status tables in the case where the failure occurs in the communication channel between the AZs. In the AZ status table 221 in the AZ 200, an alive status of "Alive" and an AZ status of "Normal" are set for the AZ 200 (AZ "#1"), which is the home AZ. An alive status of "Alive," a peer status of "Down," and an AZ status of "Down" are set for the AZ 300 (AZ "#2"). An alive status of "Alive," a peer status of "Normal," and an AZ status of "Normal" are set for the AZ 400 (AZ "#3").

In the AZ status table 321 in the AZ 300, an alive status of "Alive" and an AZ status of "Down" are set for the AZ 300 (AZ "#2"), which is the home AZ. An alive status of "Alive," a peer status of "Down," and an AZ status of "Normal" are set for the AZ 200 (AZ "#1"). An alive status of "Alive," a peer status of "Normal," and an AZ status of "Normal" are set for the AZ 400 (AZ "#3").

Applications are running in the systems in the AZs 200, 300, and 400, and the AZ status determination units 220, 320, and 420 notify the corresponding applications of the status of each of the AZs 200, 300, and 400 in response to inquiries from the applications.

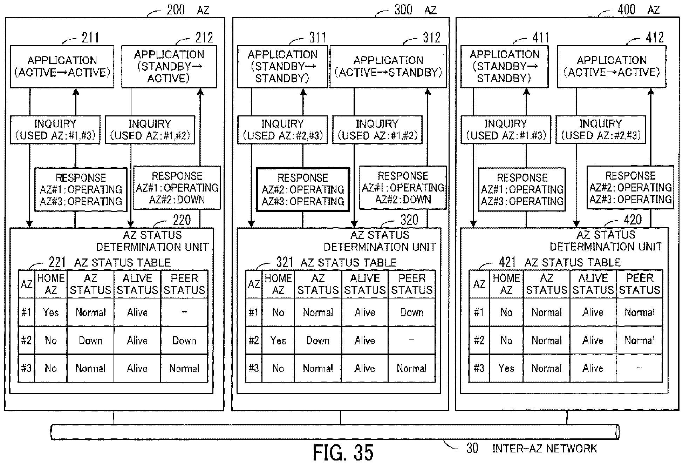

FIG. 35 illustrates an example of notifying applications of AZ status in the case where the failure occurs in the communication channel between the AZs. Responses to inquiries from the applications 211, 212, and 411 have the same content as illustrated in FIG. 29.

The AZ status determination unit 320 receives an inquiry specifying the AZ 300 with identification number of "#2" and the AZ 400 with identification number "#3" as used AZs from the application 311. The AZ status determination unit 320 checks the AZ status of each AZ in the AZ status table 321 in the inquiry response process (see FIG. 26), and determines based on the AZ status of its home AZ that the home AZ is not isolated ("No" at step S203). In addition, the AZ status determination unit 320 determines based on the status of the used AZs that part of the AZs, i.e., the AZ 300 is not normal ("No" at step S206). Then, the AZ status determination unit 320 checks the alive status and peer status of the AZ 300 whose AZ status is Down. Since the AZ 300, which is the home AZ, is not subjected to peer monitoring, the peer status is not set. Therefore, the AZ status determination unit 320 determines that the alive status and peer status both indicate normal from the fact that the alive status of the AZ 300 indicates normal ("Yes" at step S209). Then, the AZ status determination unit 320 gives a response indicating that the AZs used by the application 311 are both normal, to the inquiring application 311. Referring to the example of FIG. 35, the response indicates that the AZ 300 (AZ "#1") and the AZ 400 (AZ "#3") are operating.

The AZ status determination unit 320 receives an inquiry specifying the AZ 200 with identification number of "#1" and the AZ 300 with identification number "#2" as used AZs from the application 312. The AZ status determination unit 320 checks the AZ status of each AZ in the AZ status table 321 in the inquiry response process (see FIG. 26), and determines based on the AZ status of its home AZ that the home AZ is not isolated ("No" at step S203). In addition, the AZ status determination unit 320 determines based on the status of the used AZs that part of the used AZs, i.e., the AZ 300 is not normal ("No" at step S206) . Then, the AZ status determination unit 320 checks the alive status of the AZ 300 whose AZ status is Down, to thereby confirm that the alive status is Down ("No" at step S209). Therefore, the AZ status determination unit 320 gives a response indicating the AZ status of the AZs 200 and 300 obtained from the AZ status table 321, to the inquiring application 312. Referring to the example of FIG. 35, the response indicates that the AZ 200 (AZ "#1") is operating and the AZ 300 (AZ "#2") is down.

The AZ status determination unit 420 receives an inquiry specifying the AZ 300 with identification number of "#2" and the AZ 400 with identification number "#3" as used AZs from the application 412. The AZ status determination unit 420 checks the AZ status of each AZ in the AZ status table 421, and determines based on the AZ status of its home AZ that the home AZ is not isolated ("No" at step S203). In addition, the AZ status determination unit 420 determines based on the status of the used AZs that all the used AZs are normal ("Yes" at step S206). Therefore, the AZ status determination unit 420 gives a response indicating the AZ status of the AZs 300 and 400 obtained from the AZ status table 421, to the inquiring application 412. Referring to the example of FIG. 29, the response indicates that the AZ 300 (AZ "#2") and the AZ 400 (AZ "#3") are operating.

As described above, an application that has nothing to do with a disconnected communication channel receives a notification indicating that its used AZs are operating. This approach enables the application to eliminate wasteful troubleshooting of the failure and prevents deterioration of the availability.

### (Fourth Embodiment)

A fourth embodiment will now be described. In the fourth embodiment, a distributed coordinator is included in an AZ status determination unit.

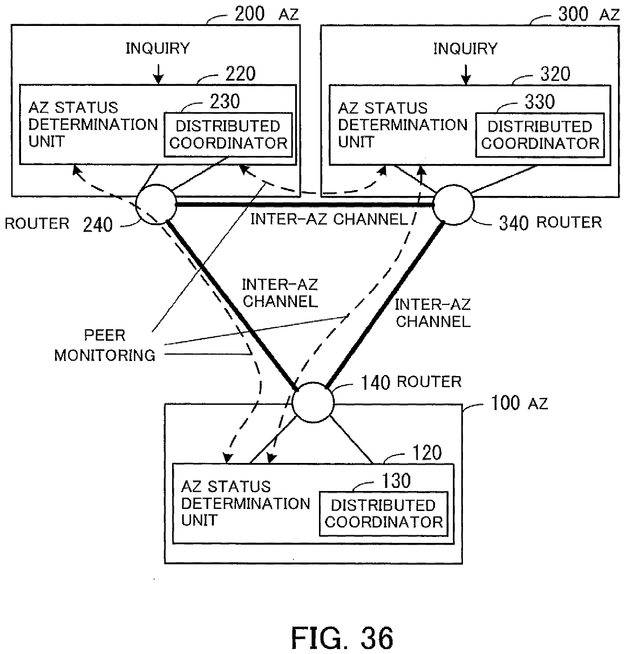

FIG. 36 illustrates a system configuration according to the fourth embodiment. In a system in an AZ 100, an AZ status determination unit 120 includes a distributed coordinator 130. In a system in an AZ 200, an AZ status determination unit 220 includes a distributed coordinator 230. In a system in an AZ 300, an AZ status determination unit 320 includes a distributed coordinator 330.

Even in the case where the distributed coordinators 130, 230, and 330 are respectively provided in the AZ status determination units 120, 220, and 320 in this way, it is possible to perform the same processing as the second or third embodiment, thereby improving the availability.

### (Fifth Embodiment)

A fifth embodiment will now be described. The fifth embodiment is designed to achieve consistent recognition of AZ status among all AZs. More specifically, as illustrated in FIG. 22 in the second embodiment, the AZ status of the AZ 300 (#2) is recognized as "Down" in the AZs 200 and 300, whereas the AZ status of the AZ 300 (#2) is recognized as "Normal" in the AZ 100. The fifth embodiment is designed to dissolve such inconsistent recognition of AZ status.

The fifth embodiment is a modification of the second embodiment. The following describes differential features from the second embodiment.

In the fifth embodiment, distributed coordinators 130, 230, and 330 manage whether fallback is now in operation in each AZ.

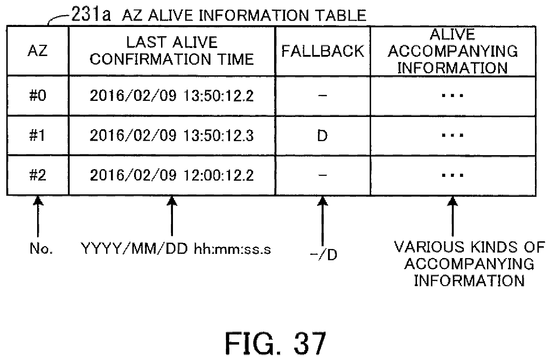

FIG. 37 illustrates an example of an AZ alive information table according to the fifth embodiment. An AZ alive information table 231a of the fifth embodiment additionally has a Fallback column in addition to the columns of the AZ alive information table 231 (see FIG. 9) of the second embodiment. The Fallback column contains a fallback flag indicating whether a corresponding AZ is in the fallback state. For example, a fallback flag of "D" is set for an AZ in the fallback state.

Whether fallback is in operation, which is managed by the distributed coordinators 130, 230, and 330, is reflected on the AZ status tables in the AZ status determination units 120, 220, and 320.

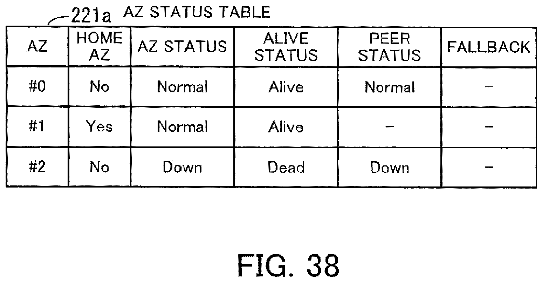

FIG. 38 illustrates an example of an AZ status table according to the fifth embodiment. An AZ status table 221a of the fifth embodiment additionally has a Fallback column in addition to the columns of the AZ status table 221 (see FIG. 8) of the second embodiment. The Fallback column contains a fallback flag indicating whether a corresponding AZ is in the fallback state. For example, a fallback flag of "D" is set for an AZ in the fallback state.

The following describes an AZ status determination process according to the fifth embodiment.

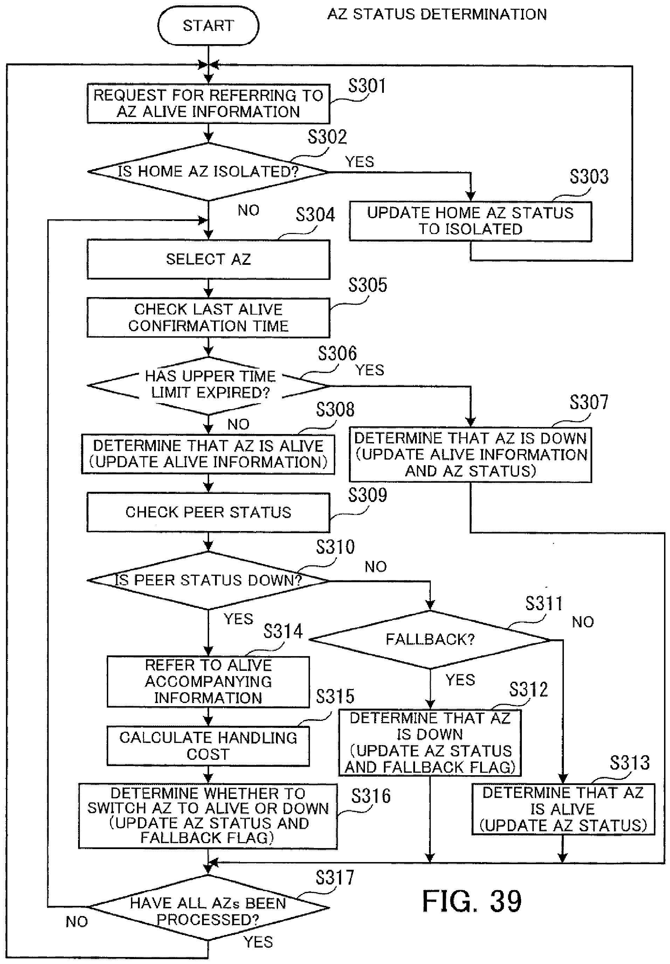

FIG. 39 is a flowchart illustrating an example of an AZ status determination process. In the process of FIG. 39, steps S301 to S310, S314, S315, and S317 are the same as steps S121 to S130, S132, S133, and S135 of the AZ status determination process of the second embodiment illustrated in FIG. 12, respectively. The following describes steps S311 to S313 and S316 of the process illustrated in FIG. 39, which are different from the steps of the second embodiment, step by step.

(Step S311) When determining at step S310 that the peer status is not Down, the AZ status management unit 222 determines whether the AZ selected at step S304 is in the fallback state. For example, if "D" is set in the Fallback column with respect to a record corresponding to the selected AZ in the AZ alive information table 231a, the AZ status management unit 222 determines that the AZ is in the fallback state. If the AZ is in the fallback state, the process proceeds to step S312. If the AZ is not in the fallback state, the process proceeds to step S313.

(Step S312) The AZ status management unit 222 determines that the selected AZ is down, and updates the AZ status and fallback status of the selected AZ. For example, the AZ status management unit 222 sets "Down" and "D," respectively, in the AZ Status and Fallback columns with respect to a record corresponding to the selected AZ in the AZ status table 221a. Then, the process proceeds to step S317.

(Step S313) The AZ status management unit 222 determines that the selected AZ is alive and updates the AZ status of the selected AZ. For example, the AZ status management unit 222 sets "Normal" in the AZ Status column with respect to the record corresponding to the selected AZ in the AZ status table 221a. Then, the process proceeds to step S317.

In the case where the peer status is not Down ("Yes" at step S310), the handling cost is calculated on the basis of alive accompanying information (steps S314 and S315), and then the process proceeds to step S316.

(Step S316) The AZ status management unit 222 determines based on a result of comparing the handling cost of the selected AZ and the handling cost of another AZ whether to switch the selected AZ to the alive or down state, and then updates the AZ status and fallback flag. For example, if the handling cost of the selected AZ is lower than the handling cost of the other AZ, the AZ status management unit 222 determines to enable the selected AZ, thereby allowing provision of a service using the applications. In this case, the AZ status management unit 222 sets "Normal" in the AZ Status column with respect to the record corresponding to the selected AZ in the AZ status table 221a. In addition, if the handling cost of the selected AZ is higher than or equal to the handling cost of the other AZ, the AZ status management unit 222 determines to disable the selected AZ, thereby stopping the provision of the service by the applications. In this case, the AZ status management unit 222 sets "Down" and a fallback flag of "D," respectively, in the AZ Status and Fallback columns with respect to the record corresponding to the selected AZ in the AZ status table 221a. Then, the process proceeds to step S317.

The following describes an AZ status determination process in the case where the AZ 300 is down as illustrated in FIG. 15.

For example, the AZ status determination unit 220 in the AZ 200 starts the AZ status determination process (see FIG. 39). The AZ status determination unit 220 determines that its home AZ is not isolated, as a result of determining whether the home AZ is isolated ("No" at step S302). Then, with respect to the AZ 100 and AZ 200, the AZ status determination unit 220 determines that an upper time limit has not expired from their last alive confirmation times ("No" at step S306) and that the peer status is Normal ("No" at step S310). In addition, the AZ status determination unit 220 determines that the AZ 100 and AZ 200 are not in the fallback state ("No" at step S311). On the basis of these determination results, the AZ status determination unit 220 determines that the AZs 100 and 200 are alive, and then updates the AZ status in the AZ status table 221a (step S313). In addition, with respect to the AZ 300, the AZ status determination unit 220 determines that the upper time limit has expired from the last alive confirmation time ("Yes" at step S306). On the basis of this determination result, the AZ status determination unit 220 determines that the AZ 300 is down, and then updates the AZ status in the AZ status table 221a (step S307).

In the AZ status determination process, the AZ status determination unit 120 in the AZ 100 obtains the same determination results at steps S302, S306, S310, and S311 as the AZ status determination unit 220 does. Then, on the basis of the determination results, the AZ status determination unit 120 updates the AZ status in the AZ status table. In this connection, since the system in the AZ 300 has stopped, it does not perform the AZ status determination process.

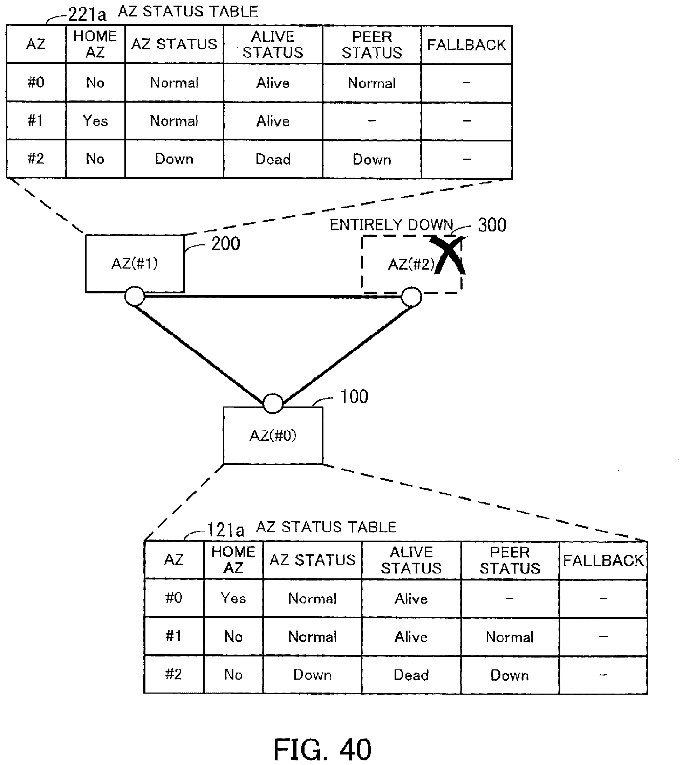

FIG. 40 illustrates an example of AZ status tables in the case where an AZ is down. The AZ status tables 121a and 221a of the fifth embodiment additionally have a Fallback column in addition to the columns of the AZ status tables 121 and 221 of the second embodiment. The AZ status tables 121a and 221a obtained after the AZ status determination process is performed in the case where an AZ is down have the same contents as illustrated in the example of FIG. 16. In this connection, the Fallback column is blank.

Applications are running in the system in the AZ 200, and the AZ status determination unit 220 notifies the applications of the status of each of the AZs 100, 200, and 300 in response to inquiries from the applications.

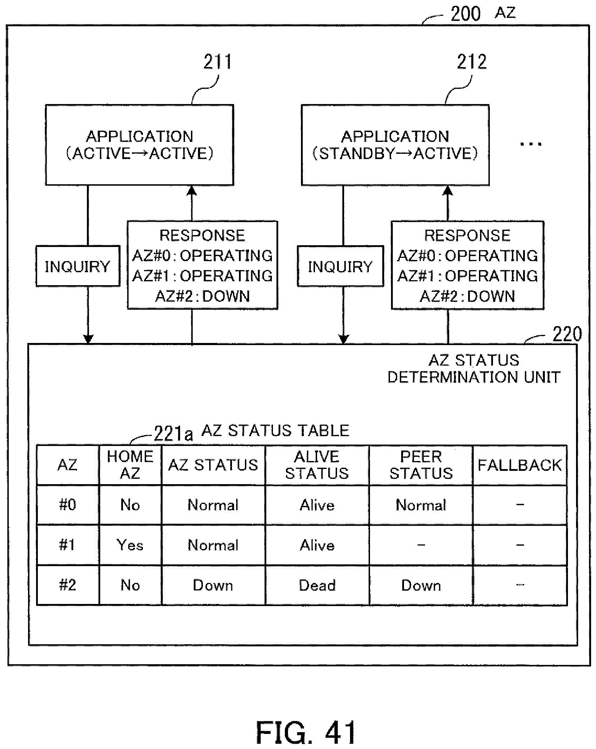

FIG. 41 illustrates an example of notifying applications of AZ status in the case where the AZ is down. Responses to inquiries have the same content as illustrated in the example of FIG. 17. An application 211 running as active remains active after receiving the response. An application 212 running as standby starts to run as active after receiving the response.

The following describes an example of status determination in the case where a router in the AZ 300 fails as illustrated in FIG. 18.

In the case where a router in the AZ 300 fails, the AZ status determination unit 120 in the AZ 100 and the AZ status determination unit 220 in the AZ 200 obtain the same determination results of the AZ status determination process (see FIG. 39) as obtained in the case where an AZ is down.

The AZ status determination unit 320 in the AZ 300 starts the AZ status determination process. The AZ status determination unit 320 determines that its home AZ is isolated, as a result of determining whether the home AZ is isolated ("Yes" at step S302) . Then, the AZ status determination unit 320 updates the AZ status in the AZ status table so as to indicate the isolated state as the AZ status of the home AZ (step S303).

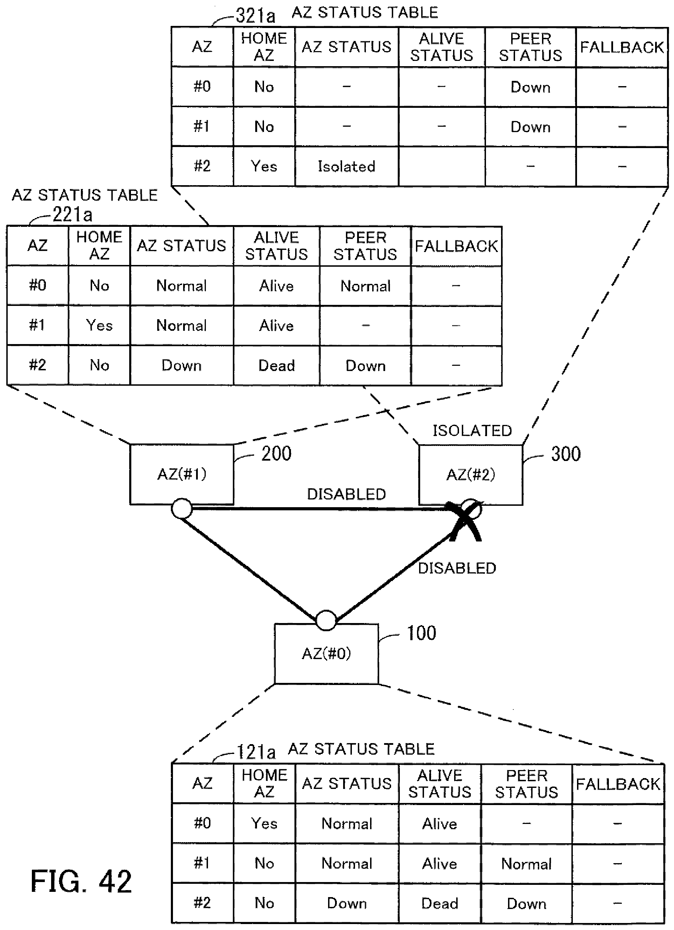

FIG. 42 illustrates an example of AZ status tables in the case where a router fails. The AZ status tables 121a, 221a, and 321a obtained after the AZ status determination process is performed in the case where an AZ is down have the same contents as illustrated in the example of FIG. 19. In this connection, the Fallback column is blank.

Applications are running in the system in the AZ 200, and the AZ status determination unit 220 notifies the applications of the status of each of the AZs 100, 200, and 300 in response to inquiries from the applications.

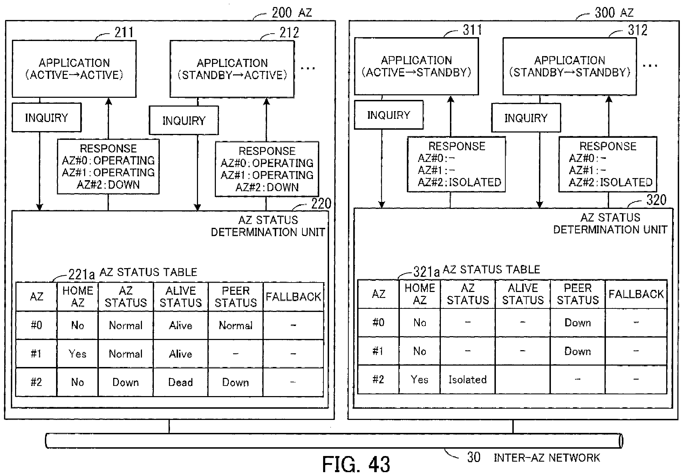

FIG. 43 is an example of notifying applications of AZ status in the case where the router fails. Responses to inquiries have the same content as illustrated in the example of FIG. 20.

The following describes an example of AZ status determination in the case where a failure occurs in a communication channel between the AZ 200 and the AZ 300 and communication through the communication channel is disabled.

For example, the AZ status determination unit 120 in the AZ 100 starts the AZ status determination process (see FIG. 39). The AZ status determination unit 120 determines that its home AZ is not isolated, as a result of determining whether the home AZ is isolated ("No" at step S302). Then, with respect to all the AZs 100, 200, and 300, the AZ status determination unit 120 determines that an upper time limit has not expired from their last alive confirmation times ("No" at step S306) and that the peer status is Normal ("No" step S310). Further, the AZ status determination unit 120 determines that the AZ 100 and AZ 200 are not in the fallback state ("No" at step S311). On the basis of these determination results, the AZ status determination unit 120 determines that the AZs 100 and 200 are alive, and then updates the AZ status in the AZ status table 121a (step S313). In addition, the AZ status determination unit 120 determines that the AZ 300 is in the fallback state ("Yes" at step S311). On the basis of this determination result, the AZ status determination unit 120 determines that the AZ 300 is down, and then updates the AZ status in the AZ status table 121a (step S312). At this time, the AZ status determination unit 120 sets a fallback flag of "D" in the Fallback column with respect to a record corresponding to the AZ 300 in the AZ status table 121a.

In addition, the AZ status determination unit 220 in the AZ 200 starts the AZ status determination process (see FIG. 39). The AZ status determination unit 220 determines that its home AZ is not isolated, as a result of determining whether the home AZ is isolated ("No" at step S302) . Then, with respect to all the AZs 100, 200, and 300, the AZ status determination unit 220 determines that an upper time limit has not expired from their last alive confirmation times ("No" at step S306). Further, the AZ status determination unit 220 determines that the peer status of the AZ 100 is Normal ("No" at step S310) and that the AZ 100 is not in the fallback state ("No" at step S311). On the basis of these determination results, the AZ status determination unit 220 determines that the AZ 100 is alive, and then updates the AZ status in the AZ status table 221a (step S313). In addition, the AZ status determination unit 220 determines that the peer status is down with respect to the AZs 200 and 300 ("Yes" at step S310). In this case, the AZ status determination unit 220 calculates the handling cost for each of the AZs 200 and 300 using the alive accompanying information of the AZ 200 and the alive accompanying information of the AZ 300 (step S315). In this example, it is assumed that the handling cost of the AZ 300 is higher than that of the AZ 200. Then, the AZ status determination unit 220 determines to switch the AZ 200 with lower handling cost to the alive state and to switch the AZ 300 with higher handling cost to the down state, and updates the AZ status in the AZ status table 221a (step S316). At this time, the AZ status determination unit 220 sets a fallback flag of "D" in the Fallback column with respect to the record corresponding to the AZ 300 in the AZ status table 221a.

The AZ status determination unit 220 in the AZ 300 performs the AZ status determination process in the same way as the AZ 200.

As described above, it is possible to reflect information about an AZ in the fallback state, on the AZ status tables 121, 221, and 321 of the AZs 100, 200, and 300.

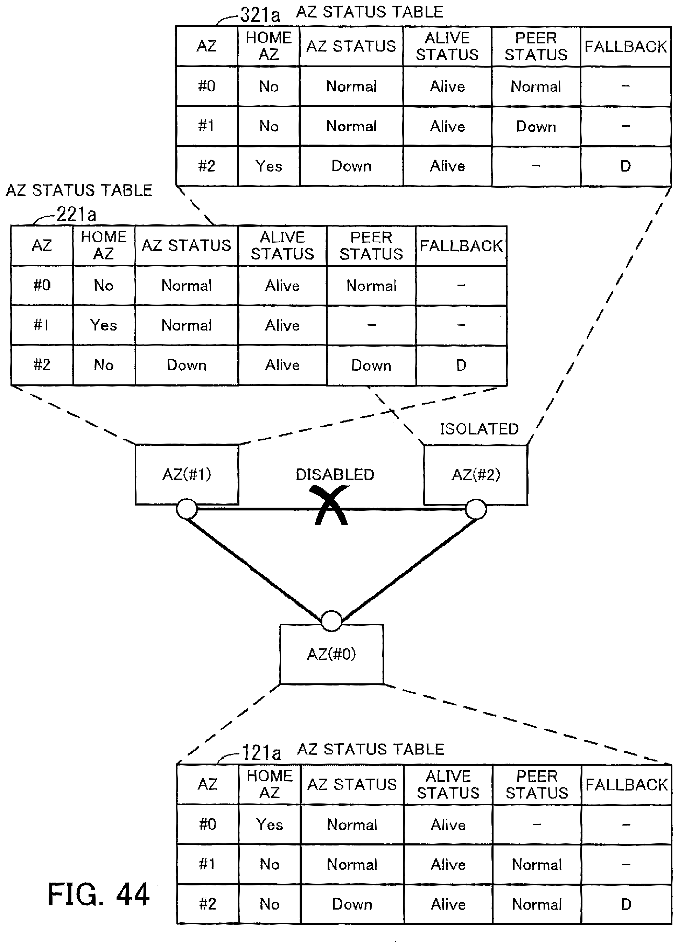

FIG. 44 illustrates an example of AZ status tables in the case where a failure occurs in a communication channel between AZs. As illustrated in FIG. 44, in the AZ status tables 121a, 221a, and 321a, a fallback flag of "D" is set in the Fallback column with respect to a record corresponding to the AZ 300 (#2).

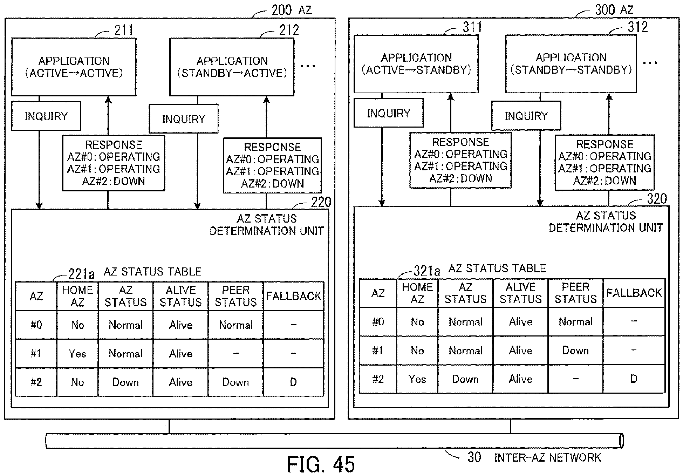

FIG. 45 illustrates an example of notifying applications of AZ status in the case where the failure occurs in the communication channel between the AZs. Responses to inquiries have the same content as illustrated in the example of FIG. 23.

As described above, in the fifth embodiment, the AZ 100 is able to recognize that fallback is in operation in the AZ 300, unlike the second embodiment.

In the fifth embodiment, the second embodiment is modified so as to achieve consistent recognition of AZ status among all AZs 100, 200, and 300. In addition, the third embodiment may be modified in the same way. In this case, in the situation illustrated in FIG. 34 of the third embodiment, the AZ status table 421 in the AZ 400 contains "Down" as the AZ status of the AZ 300 (#2).

### (Other Embodiments)

As illustrated in the second embodiment, in the case where an application is deployed in two AZs, the AZ 100 where the application is not executed is provided. In the example of FIG. 5, the system in the AZ 100 includes the AZ status determination unit 120 and distributed coordinator 130. Out of these, the AZ status determination unit 120 does not need to be provided.

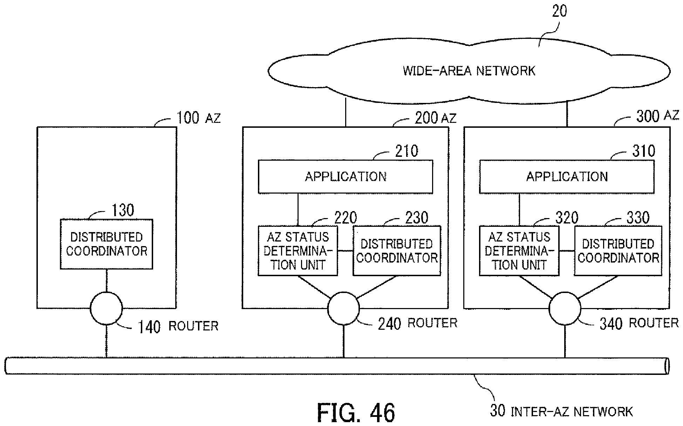

FIG. 46 illustrates an example of functions of systems in AZs. An AZ 100 illustrated in FIG. 46 has a distributed coordinator 130. However, the AZ 100 does not have the AZ status determination unit 120 illustrated in FIG. 5. Even in the case where the AZ 100 where no application is executed does not have the AZ status determination unit 120, it is possible to perform the processing of the second embodiment properly.

In this connection, it is possible to achieve high availability of the AZ status determination units 120, 220, and 320 and distributed coordinators 130, 230, and 330 of the second embodiment illustrated in FIG. 5, in the AZs 100, 200, and 300.

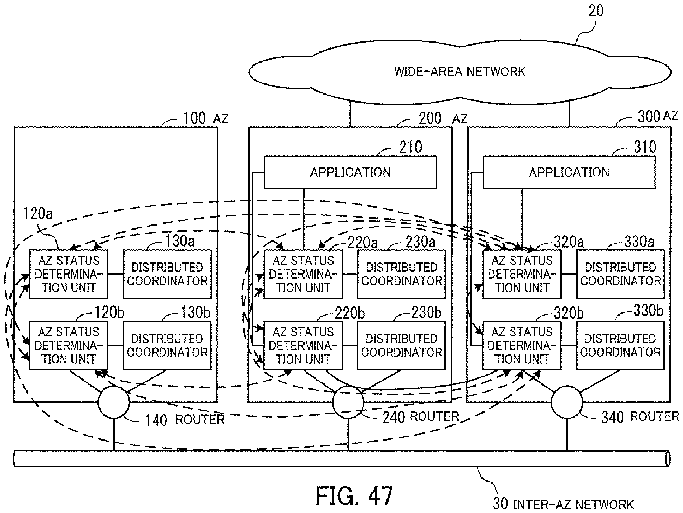

FIG. 47 illustrates an example of availability by redundancy. A system in the AZ 100 includes a plurality of AZ status determination units 120a and 120b and a plurality of distributed coordinators 130a and 130b. A system in the AZ 200 includes a plurality of AZ status determination units 220a and 220b and a plurality of distributed coordinators 230a and 230b. A system in the AZ 300 includes a plurality of AZ status determination unit 320a and 320b and a plurality of distributed coordinators 330a and 330b. For example, the AZ status determination units 120a, 120b, 220a, 220b, 320a, and 320b are able to communicate with each other. For example, if the AZ status determination unit 120a fails in the AZ 100, the AZ status determination unit 120b is able to take over in order to prevent a loss of the AZ status determination function in the AZ 100.

Such a redundant configuration of each function makes it possible to achieve high availability of each of the AZs 100, 200, and 300. The improvement in the availability of each of the AZs 100, 200, and 300 leads to an improvement in the availability of the entire system.

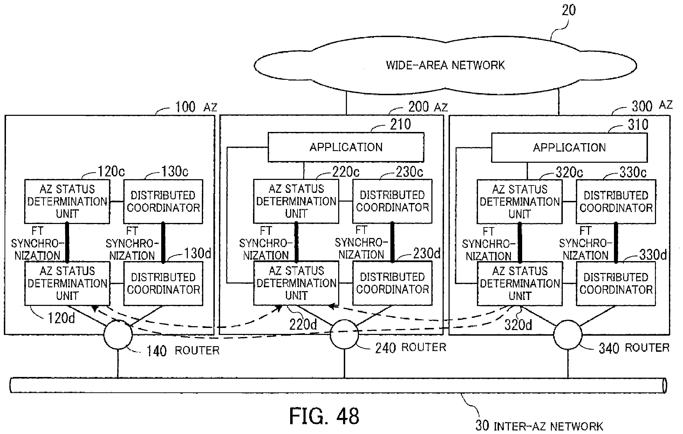

FIG. 48 illustrates an example of availability by a fault tolerant system. A system in an AZ 100 includes a plurality of AZ status determination units 120c and 120d and a plurality of distributed coordinators 130c and 130d. A system in an AZ 200 includes a plurality of AZ status determination units 220c and 220d and a plurality of distributed coordinators 230c and 230d. A system in an AZ 300 includes a plurality of AZ status determination units 320c and 320d and a plurality of distributed coordinators 330c and 330d. The same kinds of constitutional elements in the same AZ operate while synchronizing with each other for FT (Fault Tolerance), so that if one of them fails, the other takes over in order to prevent a loss of the functions.

The foregoing is considered illustrative only of the principles of the invention. Further, since numerous modifications and changes will readily occur to those skilled in the art, it is not intended to limit the invention to strictly that described herein but such is to include all modifications and equivalents falling within the scope of the invention herein claimed.

### Reference Signs List

- 1 to 3: AZ
- 2a: Local system
- 4a, 4b: Virtual machine
- 10: Availability management apparatus
- 11: Communication unit
- 12: Storage unit
- 13: Processing unit

## Claims

1. An availability management program that causes a computer in a local system built in a first facility to perform a process comprising:
confirming whether direct communication with a plurality of external systems is possible, the plurality of external systems being respectively built in a distributed manner in a plurality of second facilities different from the first facility;
determining that the local system is in an isolated state upon determining that the direct communication with all of the plurality of external systems is disabled;
obtaining, upon determining that the direct communication with at least one of the plurality of external systems is possible, a last alive confirmation time of each of the plurality of external systems via an external system with which communication is possible, the last alive confirmation time indicating a time when normal operation of the each of the plurality of external systems was last confirmed;
determining that, among the plurality of external systems, a first external system with respect to which a prescribed time or longer has passed from the last alive confirmation time thereof is in a down state;
determining that, among the plurality of external systems, a second external system with respect to which the prescribed time or longer has not passed from the last alive confirmation time thereof and with which the direct communication is possible is in an alive state; and
determining to switch one of the local system and a third external system to the down state and another of the local system and the third external system to the alive state, under prescribed conditions, in a situation where the plurality of external systems include the third external system with respect to which the prescribed time or longer has not passed from the last alive confirmation time thereof and with which the direct communication is disabled.

2. The availability management program according to claim 1, wherein the availability management program causes the computer to further perform the process including notifying a virtual machine of results of determining as to the local system and the plurality of external systems, the virtual machine running in the local system.

3. The availability management program according to claim 2, wherein the notifying to the virtual machine includes receiving an inquiry specifying a used system used by the virtual machine, from the virtual machine, and even upon determining that the used system is in the down state in the situation where the plurality of external systems include the third external system, notifying the virtual machine that the used system is in the alive state, in response to the used system being one of the local system and an external system with which the direct communication is possible.

4. The availability management program according to any of claims 1 to 3, wherein the determining in the situation where the plurality of external systems include the third external system includes obtaining cost information via an external system other than the third external system among the plurality of external systems, and determining which of the local system and the third external system to switch to the down state and which of the local system and the third external system to switch to the alive state, based on the cost information, the cost information being used for calculating cost that is needed to deal with a change in an operating status of the third external system.

5. The availability management program according to claim 4, wherein the determining in the situation where the plurality of external systems include the third external system includes comparing first cost that is needed to switch the local system to the alive state and the third external system to the down state with second cost that is needed to switch the third external system to the alive state and the local system to the down state, based on the cost information, determining to switch the local system to the alive state and the third external system to the down state upon determining that the first cost is lower, and determining to switch the third external system to the alive state and the local system to the down state upon determining that the second cost is lower.

6. The availability management program according to claim 5, wherein the determining in the situation where the plurality of external systems include the third external system includes calculating the first cost and the second cost using a number of applications running as standby in the local system and a number of applications running as standby in the third external system, respectively.

7. The availability management program according to any of claims 1 to 6, wherein the process further includes updating the last alive confirmation time of one external system among the plurality of external systems to a time when a different external system other than the one external system last confirmed the alive state of the one external system or a time when the computer last confirmed the alive state of the one external system, whichever is later.

8. An availability management method executed by a computer in a local system built in a first facility, the availability management method comprising:
confirming whether direct communication with a plurality of external systems is possible, the plurality of external systems being respectively built in a distributed manner in a plurality of second facilities different from the first facility;
determining that the local system is in an isolated state upon determining that the direct communication with all of the plurality of external systems is disabled;
obtaining, upon determining that the direct communication with at least one of the plurality of external systems is possible, a last alive confirmation time of each of the plurality of external systems via an external system with which communication is possible, the last alive confirmation time indicating a time when normal operation of the each of the plurality of external systems was last confirmed;
determining that, among the plurality of external systems, a first external system with respect to which a prescribed time or longer has passed from the last alive confirmation time thereof is in a down state;
determining that, among the plurality of external systems, a second external system with respect to which the prescribed time or longer has not passed from the last alive confirmation time thereof and with which the direct communication is possible is in an alive state; and
determining to switch one of the local system and a third external system to the down state and another of the local system and the third external system to the alive state, under prescribed conditions, in a situation where the plurality of external systems include the third external system with respect to which the prescribed time or longer has not passed from the last alive confirmation time thereof and with which the direct communication is disabled.

9. An availability management apparatus, comprising:
a communication unit configured to
confirm whether direct communication with a plurality of external systems is possible, the plurality of external systems being respectively built in a distributed manner in a plurality of second facilities different from a first facility where a local system including the availability management apparatus is built, and
obtain, upon determining that the direct communication with at least one of the plurality of external systems is possible, a last alive confirmation time of each of the plurality of external systems via an external system with which communication is possible, the last alive confirmation time indicating a time when normal operation of the each of the plurality of external systems was last confirmed;
a storage unit configured to store therein a result of confirming whether the direct communication is possible and the last alive confirmation time; and
a processing unit configured to
determine that the local system is in an isolated state upon determining that the direct communication with all of the plurality of external system is disabled,
determine that, among the plurality of external systems, a first external system with respect to which a prescribed time or longer has passed from the last alive confirmation time thereof is in a down state,
determine that, among the plurality of external system, a second external system with respect to which the prescribed time or longer has not passed from the last alive confirmation time thereof and with which the direct communication is possible is in an alive state, and
determine to switch one of the local system and a third external system to the down state and another of the local system and the third external system to the alive state, under prescribed conditions, in a situation where the plurality of external systems include the third external system with respect to which the prescribed time or longer has not passed from the last alive confirmation time thereof and with which the direct communication is disabled.
